# EUROPEAN PATENT SPECIFICATION

(11) **EP 0 985 008 B1**
(45) Date of publication and mention of the grant of the patent: **27.11.2002**
(21) Application number: 97922121.5
(22) Date of filing: 21.05.1997
(51) Int. Cl.: C09K 19/00, C09K 19/32, C09K 19/40, G02F 1/1335

(54) **LYOTROPIC MESOMORPHIC MEDIA AND OPTICAL COMPENSATING FILM USING THE SAME**
LYOTROPE MESOMORPHE MITTEL UND OPTISCHER KOMPENSATIONSFOLIE
MILIEUX LYOTROPIQUES ET MESOMORPHES ET FILM DE COMPENSATION OPTIQUE DANS LEQUEL LESDITS MILIEUX SONT UTILISES

(43) Date of publication of application: 15.03.2000
(73) Proprietor: CHISSO CORPORATION, Osaka-shi Osaka 530-6591 (JP)
(72) Inventor: DEMUS, Dietrich, D-06178 Halle (DE); TAKEUCHI, Hiroyuki, Chiba 290 (JP); MIYAZAWA, Kazutoshi, Chiba 290-01 (JP)
(74) Representative: Ruffles, Graham Keith
(86) International application number: JP9701705
(87) International publication number: WO98053027

(56) References cited:
- EP-A- 0 154 953
- EP-A- 0 315 472
- FR-A- 2 606 418
- CHANDRASEKHAR S: "DISCOTIC LIQUID CRYSTALS A BRIEF REVIEW" LIQUID CRYSTALS, vol. 14, no. 1, 1 January 1993, pages 3-14, XP000381687
- BAUER S: "MOLECULAR ENGINEERING OF DISCOTIC LIQUID CRYSTALS" MAKROMOLEKULARE CHEMIE, MACROMOLECULAR SYMPOSIA, vol. 64, 1 December 1992, pages 19-32, XP000334550

## Description

### Technical field

This invention relates to lyotropic mesomorphic media, optical compensating film using the same and its use for liquid crystals displays as optical compensators. The compensators improve the optical properties of the displays.

### Background art

Liquid crystal displays are widespread used for clocks and watches, computers, flat screens for TV and technical applications, and large area information devices.

Liquid crystal displays should possess good visibility by viewing on it under different angles, specially flat angles deviating from the normal observation direction. The different kinds of displays using nematic liquid crystals, however, show limitations and shortcomings concerning the viewing angle characteristics.

In laid open Japanese patent applications Heisei 4-229828 and 4-258923, a method of improvement of viewing angles using a phase difference film which is placed between a liquid crystal cell and a polarizer, is proposed. However the improvement of the viewing angles is very small and is not suitable for car use.

In laid open Japanese patent applications Heisei 4-366808 and 4-366809, phase difference films comprising nematic liquid crystal cells filled with chiral nematic liquid crystal mixtures, with tilted optic axis are proposed. However the weight of the displays constructed by this method is very large due to the doubled liquid crystal cells, and not suitable for applications.

In laid open Japanese patent applications Heisei 5-80323, phase difference films, made from polycarbonates, with tilted optic axis are proposed. However since the production of the film that the film is produced by cutting uniaxial polycarbonates in tilted angles, is very complicated and expensive.

In laid open Japanese patent applications Heisei 5-5823, phase difference films comprising light sensitive materials that the conformations can be changed by irradiation of light, are proposed. By this method very light and cheap liquid crystal displays with wide viewing angles can be realized. However the film is very chemically unstable against heat and light, and is not suitable for practical applications.

In EP 0 656 559 A1 optical compensators comprising discotic nematic phases or monoaxial columnar phases, which are oriented in the liquid crystalline state are proposed. Since the phase transition temperatures (solid-discotic nematic transition temperatures) are very high, heating to temperatures above 200°C is necessary, which is inconvenient and may cause decomposition in the quite sensitive materials.

In DE OS 43 39 395 A1, DE OS 195 19 928 A1 and GB 2 272 779 A improvements of this method are disclosed, comprising discotic nematic phases with negative optical birefringence, produced from low molecular or polymer materials using a large variety of chemical structures. These phases have to be oriented in the liquid crystalline state, by aligning layers or electrical field or magnetic field, at markably elevated temperatures.

EP 0 676 652 A2 discloses a method for lowering the transition temperatures of the discotic nematic phases by at least 10°C, leaving the transition temperature to the discotic phase as high as 105°C or higher. Also this method for preparation of the optical compensators requires uncomfortable heating of the layers.

### Disclosure of Invention

We have found, that lyotropic mesomorphic phases consisting of sheet-like molecules and non-polar solvents, having negative optical birefringence, are well suited for the construction of optical compensators for liquid crystal displays.

These lyotropic mesomorphic phases can be formed by mixing molecules with sheet-like shape and non-polar solvents as e.g. alkanes, squalane, decahydronaphthalene and other hydrocarbons, or by mixing of sheet-like charge-transfer complexes and non-polar solvents (e.g. alkanes, squalane, decahydronaphthalene and other hydrocarbons). These phases can exist in the mesomorphic state at room temperature, heating in order to orient the compensating layers is not necessary. In some cases the compensating layers exist at room temperature in the glassy mesomorphic state; in these cases the orientation is possible above the glass transition temperature.

The present inventions have the following aspects.
(1) Lyotropic mesomorphic nematic or columnar media for the construction of optical compensators for liquid crystal displays, which comprises sheet-like molecules and non-polar solvents, and have negative optical birefringence, wherein the sheet-like molecules are selected from the group consisting of compounds having formula (1-1) to (1-46), described below, and wherein the non-polar solvents are selected from alkanes, alkenes, alkadienes, alkatrienes and alkynes each having 4-40 carbon atoms and derivatives thereof in which a methylene moiety may be replaced by O, S, C=O, COO or OCO.
(2) Lyotropic mesomorphic nematic or columnar media according to (1), wherein the sheet-like molecules are mixtures of sheet-like charge-transfer complexes made of sheet-like molecules as donator and sheet-like molecules as acceptor.
(3) Lyotropic mesomorphic media according to (1) or (2), wherein the media exists at room temperature in a glassy mesomorphic state.
(4) Lyotropic mesomorphic media according to (1), (2), or (3), wherein the sheet-like molecules are polymers having sheet-like side groups.
(5) Lyotropic mesomorphic media according to (1), (2), or (3), wherein the sheet-like molecules are polymerizable monomers resulting in polymers with sheet-like units.
(6) Lyotropic mesomorphic media according to (1), (2), or (3), wherein the non-polar solvents are selected from alkanes having 4-40 carbon atoms and derivatives thereof in which a methylene moiety may be replaced by O, S, C=O, COO or OCO.
(7) Lyotropic mesomorphic media according to (1), (2), or (3) wherein the non-polar solvents are selected from alkenes, alkadienes, alkatrienes and alkynes each having 4-40 carbon atoms, and derivatives thereof in which a methylene moiety may be replaced by O, S, C=O, COO or OCO.
(8) Lyotropic mesomorphic media according to (1), (2), or (3), wherein the non-polar solvents are polymerizable hydrocarbons.
(9) Lyotropic mesomorphic media according to (1), (2), or (3), wherein the non-polar solvents are polymeric hydrocarbons.
(10) Lyotropic mesomorphic media according to (1), (2), or (3), in which the non-polar solvents are nematic mixtures consisting of alkanes and methacrylate or photoresist materials.
(11) Optical compensating film made of the lyotropic mesomorphic media of (1) or (2), useful for the construction of optical compensators for liquid crystal devices.
(12) Optical compensating film made of the lyotropic mesomorphic media according to (1), (2), or (3), wherein the mesomorphic media is mechanically stabilized by polymeric networks made by polymerization of polymerizable hydrocarbons.
(13) Optical compensating film made of the lyotropic mesomorphic media according to (1), (2), or (3), wherein the mesomorphic media is stabilized by dispersion of the sheet-like molecules as droplets in polymers.
(14) Liquid crystal devices using the optical compensating film of (11).

The sheet-like molecules are selected from the group consisting of compounds having the formulae 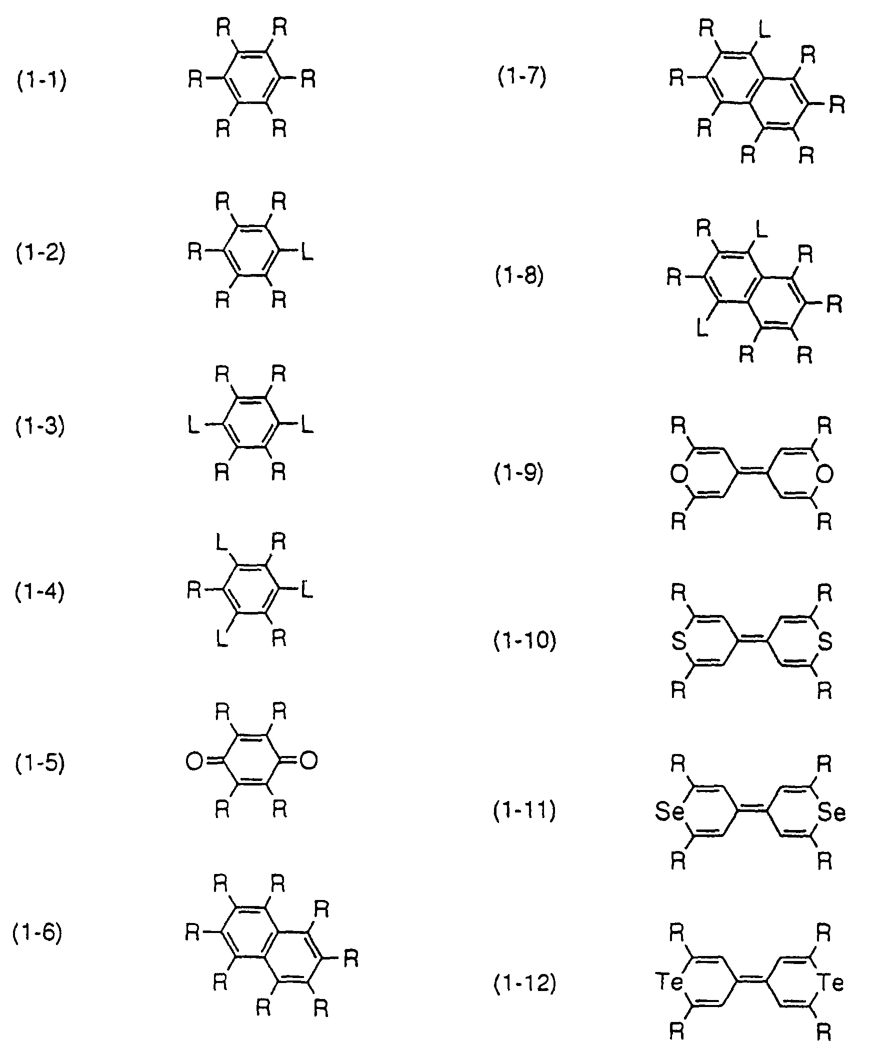 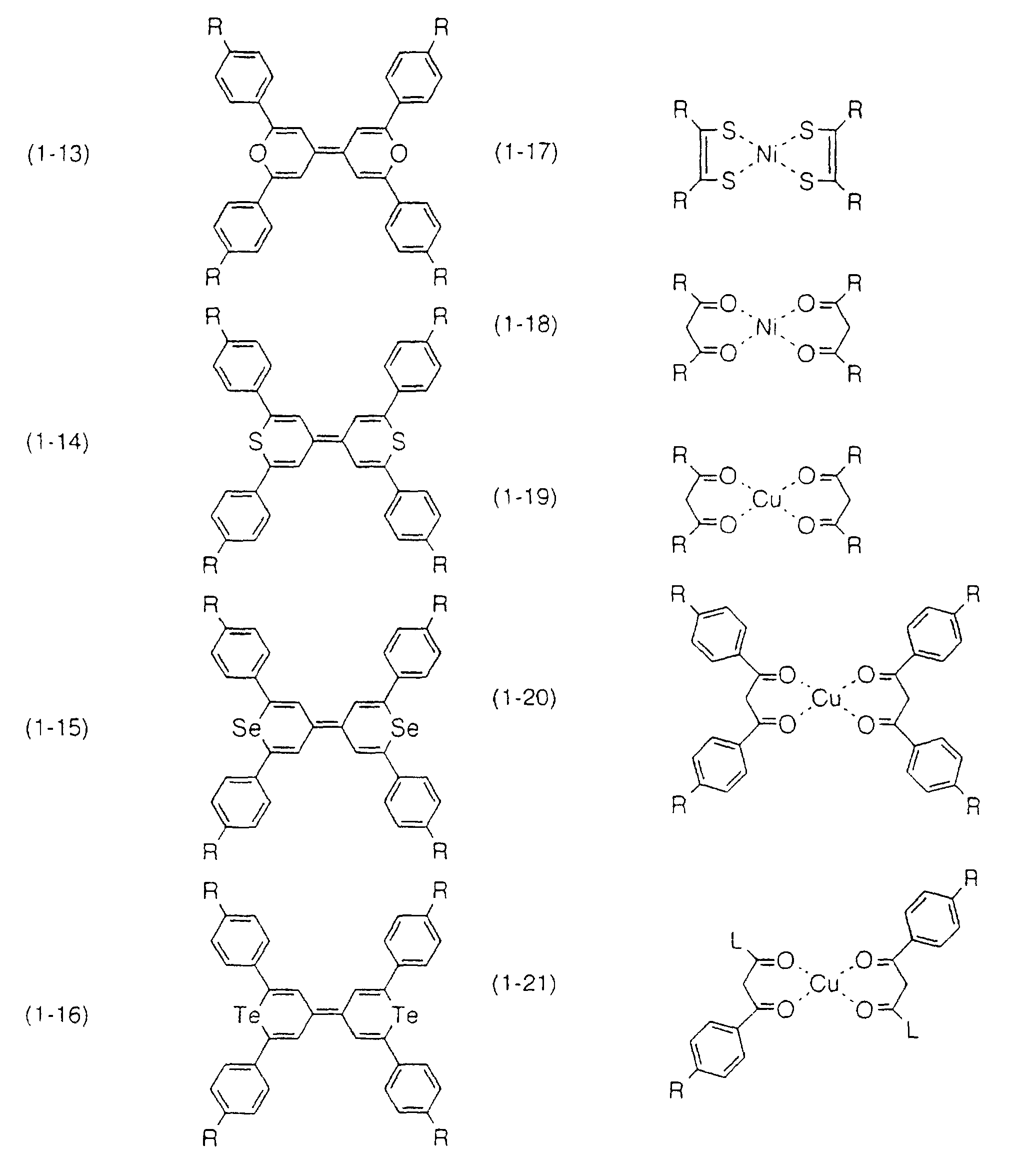 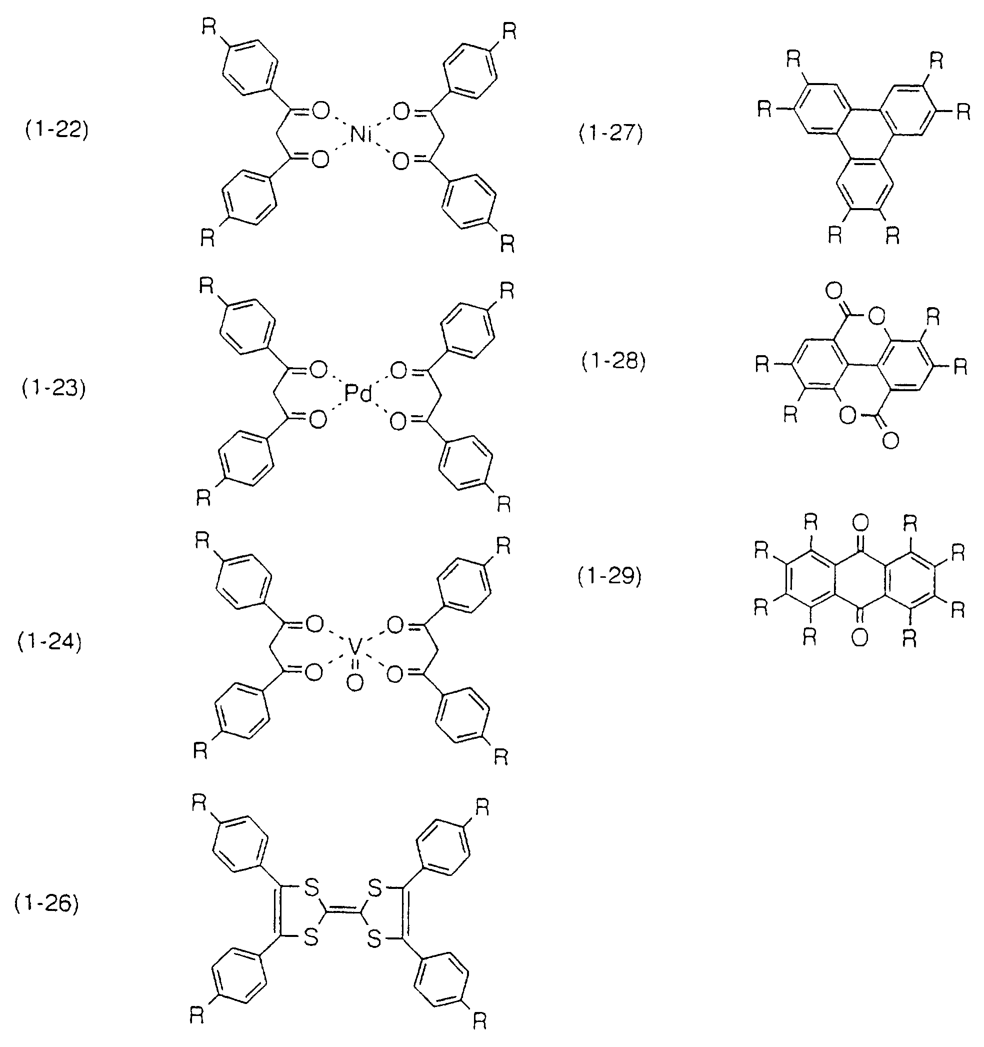 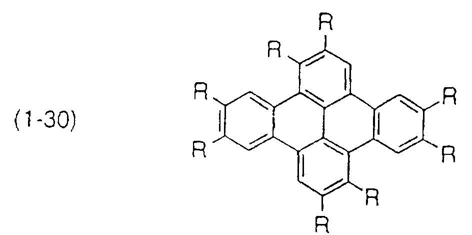 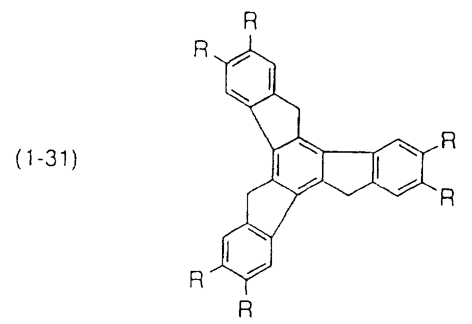 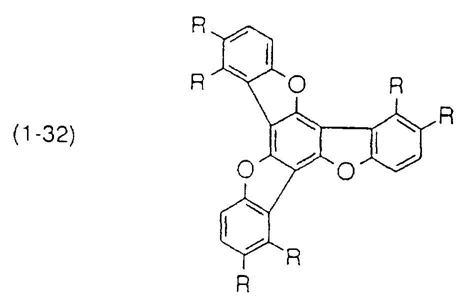 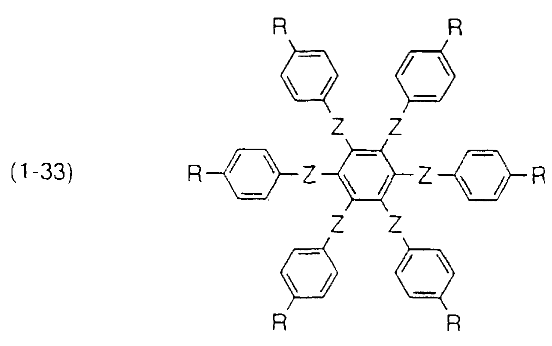 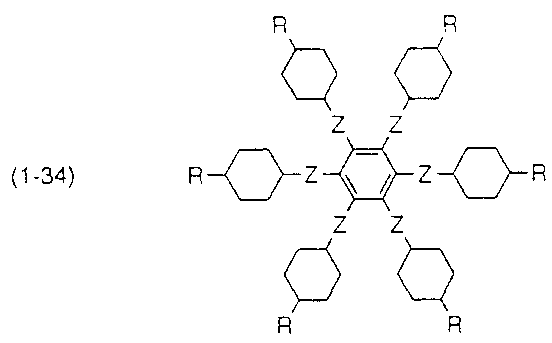 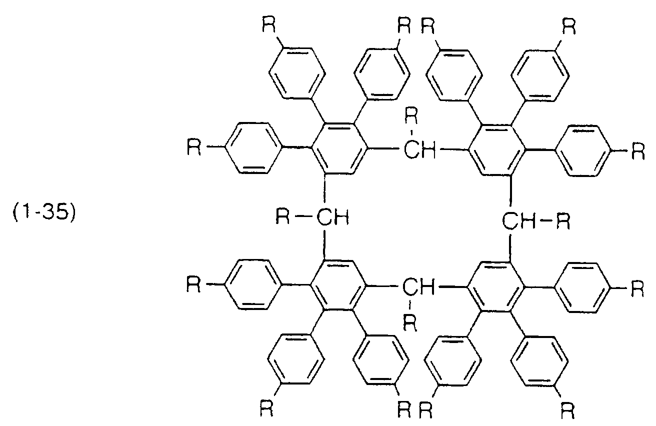 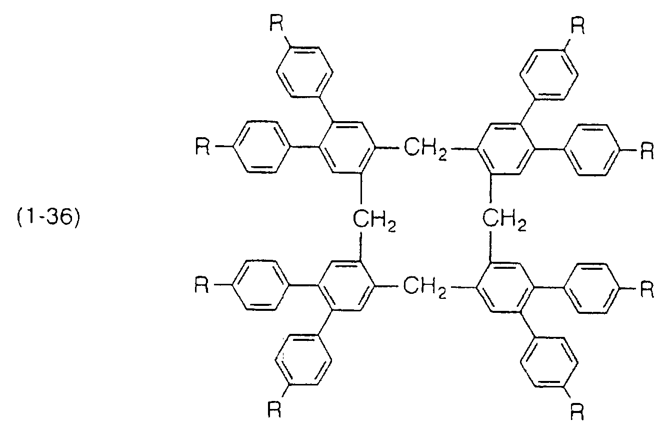 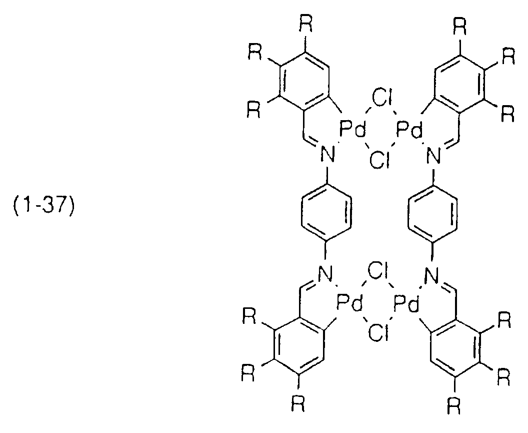 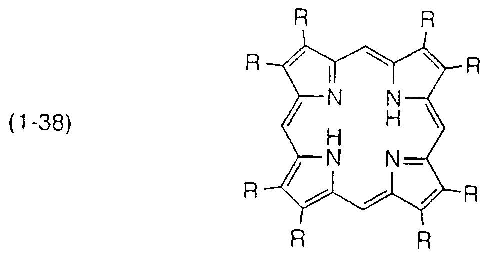 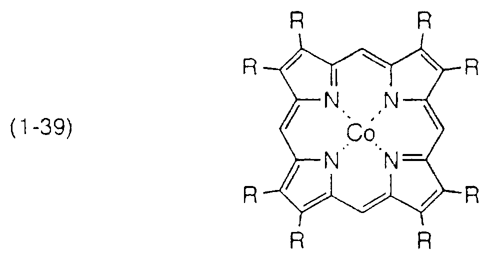 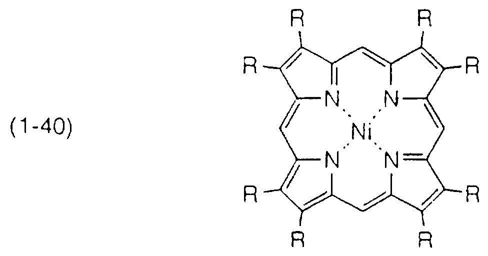 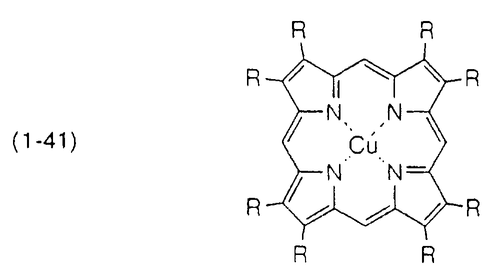 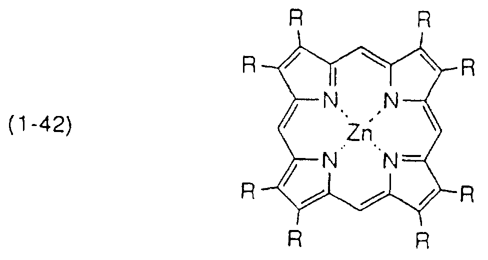 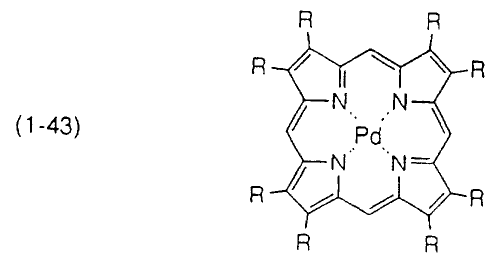 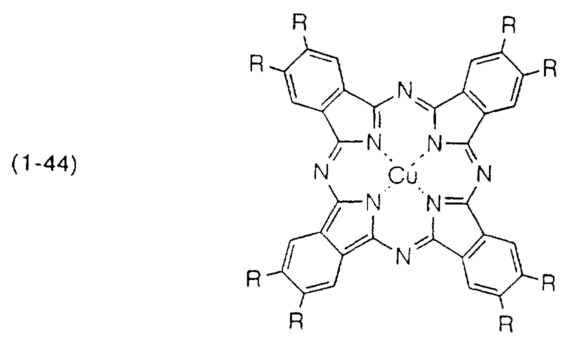 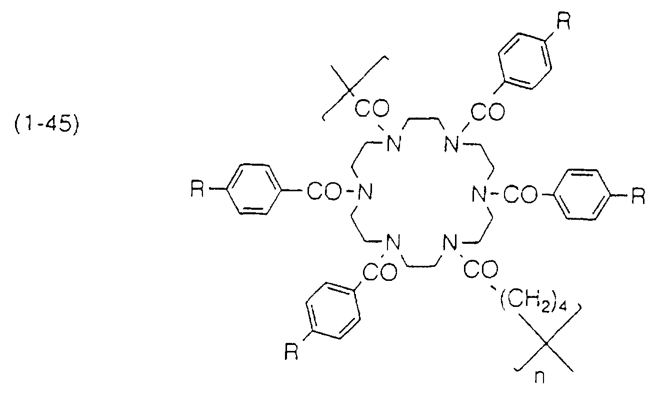 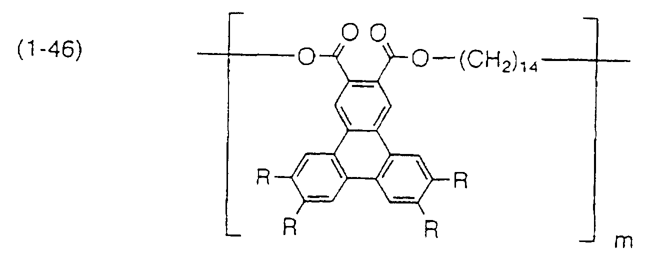 wherein R is selected from the group consisting of alkyl or alkoxy groups having 1 to 20 carbon atoms, in which methylene moiety in the groups may be replaced by O, S, COO, OCO, CH=CH or C≡C, and groups of the formula (2-1) to (2-13), in which R' represents alkyl, alkoxy, alkoxylalkyl, alkenyl, alkenyloxy, alkynyl, alkynyloxy or alkadienyl groups, or aromatic residues, L represents halogen, hydrogen, cyano group, hydroxy group or the groups of the formula (3-1), Z represents a single bond, CH=CH, C≡C or CH₂O, and m, n and p represent independently integral numbers.

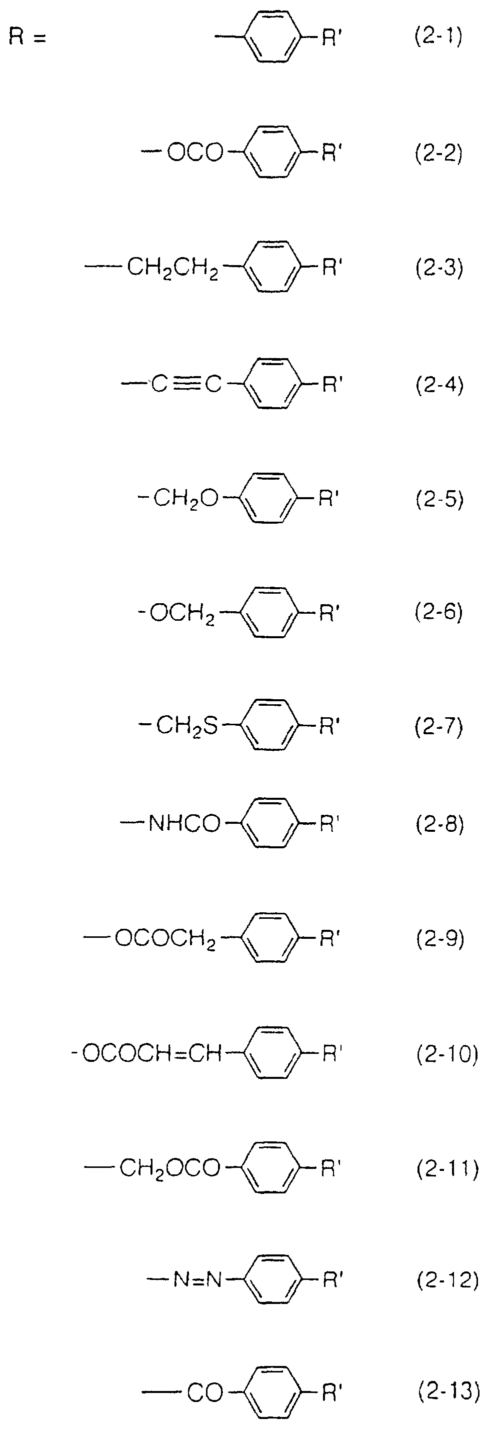

L = ―O-(CH₂)ₚ-COOH (3-1)

The sheet-like molecules can be polymers with sheet-like side groups, or polymerizable monomers resulting in polymers with sheet-like units.

The sheet-like molecules of formulae (1-1) - (1-46) listed above are used in this invention.

The non-polar solvents are alkanes, alkenes, alkadienes, alkatrienes and alkynes having 4-40 carbon atoms or derivatives thereof in which a methylene moiety may be replaced by O, S, C=O, CO₂ or OCO, preferably alkanes including decahydronaphthalene, alkenes including squalene, alkadienes, alkynes, acrylates, methacrylates, vinyl esters and allyl esters.

When the non-polar solvent comprises a hydrocarbon or mixture thereof, these can be polymeric molecules, or preferably polymerizable low molecular weight molecules. Any kind of hydrocarbons can be used for the solvents, provided that they are miscible with the sheet-like molecules or the charge transfer complexes.

The hydrocarbons containing a double bond or a triple bond in their structures can be polymerized after constructing optical compensating films, and to give mechanically stable polymer network structures.

The lyotropic mesomorphic phases can have nematic structure, or columnar structure, and specially they may exist in the glass mesomorphic state.

The lyotropic mesomorphic phases may be mechanically stabilized by polymer networks, or they can be stabilized by dispersion as droplets in polymers.

The optical compensators for liquid crystal displays comprise a transparent supporting layer, an aligning layer and an anisotropic layer, having lyotropic mesomorphic phases with negative optical birefringence.

As transparent supporting layer, any polymers having sufficient transparency can be used, e.g. acetylcelluloses, polysulfonates, polycarbonates, polyimides and other materials, which preferably should possess very low birefringence. By usual procedures the birefringence of such materials can be diminished.

Supporting layers should possess very low or no birefringence.

The aligning layer can be fixed directly on the transparent supporting layer, or an intermediate layer providing better adhesion (layers made from polar materials like gelatine, polyacrylate, different kind of copolymers) can be used. The aligning layer can be made by using known procedures of the state of the art, which are oblique evaporation of inorganic materials (ITO), or rubbed polyimide layers, or photopolymerized layers with polarized light.

The invention is explained at the hand of detailed examples.

### Best Mode for Carrying Out the Invention

### Example 1

The compound **A :** Octaheptyloxy-dibenzopyrene (DBP7) 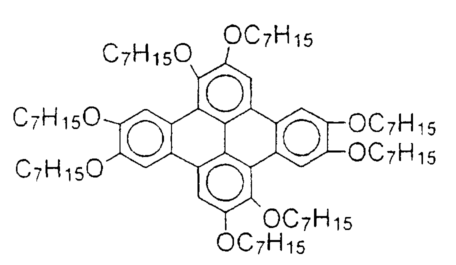 was synthesized according to the instructions by S. Zamir, D. Singer, N. Spielberg, E. J. Wachtel, H. Zimmermann, R. Poupko, Z. Luz, Liq. Cryst. **21,** 39-50 (1996).

This compound exhibited a charge-transfer complex with 2,4,7-trinitro-9-fluorenone (TNF). The complex was soluble in n-tridecane (n-C₁₃H₂₇). The equimolar mixture of DBP7 with TNF and 23.5 weight % n-C₁₃H₂₇ showed nematic phase from below room temperature to 60°C.

The amount of 1 g of this mixture was dissolved in 20 ml dichloromethane and spread on a surface, consisting of a layer of polycarbonate covered with unidirectionally rubbed polyimide. After a few minutes the solvent was evaporated, and the nematic layer was obtained as a uniformly oriented film. The film had optically negative character, and the birefringence was about Δε = -0.01.

This film was used as a optical compensation film for improving the optical characteristics of an STN display. An STN display, made by the well known technology, was covered by the optical compensation film, and this arrangement was sandwitched by two polarizers. The visibility and optical contrast of the display, seen from oblique angles, was improved remarkably.

### Example 2

The compound **B** : 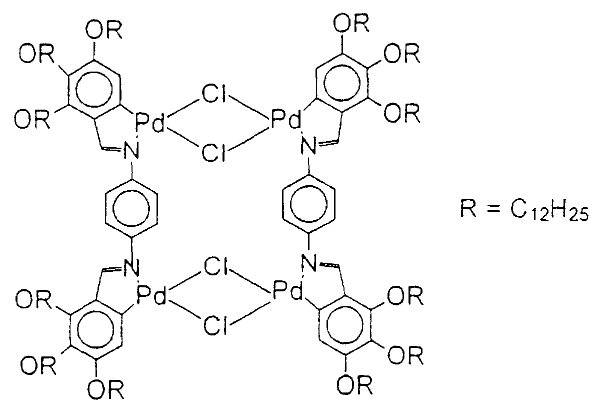 has been synthesized according to the instructions given by K. Praefcke, D. Singer, B. Gündogan Mol. Cryst. Liq. Cryst. **223**, 181 (1992)
The following mixture was prepared:
45 weight % of compound **B** and 55 weight % of n-decane were mixed by continuous stirring for 15 minutes. 0.2 g of this mixture were dissolved in 5 ml of chloroform. A small amount of the solution was spread on the surface of an obliquely deposited ITO layer on a supporting glass. After some minutes the solvent was evaporated, the glass was heated to 50°C for 5 minutes, and an oriented nematic layer was formed. The nematic layer had negative optical anisotropy and can be used as an optical compensator for TN and STN LCD's, in order to improve the angular dependence of visibility and to enhance the contrast.

### Example 3

An equimolar mixture of compound **B** and 2,4,7-trinitro-9-fluorenone was prepared by dissolving the respective amounts of materials in dichloromethane and evaporation of the solvent in vacuum. A charge-transfer complex was formed.

The amount of 1 g of a mixture consisting of 35 weight % of this charge transfer complex and 65 weight % of n-hexadecane have been dissolved in 20 ml of chloroform. A small amount of this solution was spread on the surface of an obliquely deposited ITO layer on a supporting glass. After some minutes the solvent was evaporated, the glass was heated to 65°C, and an oriented nematic layer was formed. The nematic layer has negative optical anisotropy and can be used as an optical compensator for TN and STN LCD's, in order to improve the angular dependence of visibility and to enhance the contrast.

### Industrial Applicability

The lyotropic mesomorphic media of the present invention is well suited for the construction of optical compensators for liquid crystal displays used for clocks and watches, computers, flat screens for TV and technical applications, and large area information devices.

## Claims

1. Lyotropic mesomorphic nematic or columnar media for the construction of optical compensators for liquid crystal displays, which comprises sheet-like molecules and non-polar solvents, and have negative optical birefringence, wherein said sheet-like molecules are selected from the group consisting of compounds having the formula 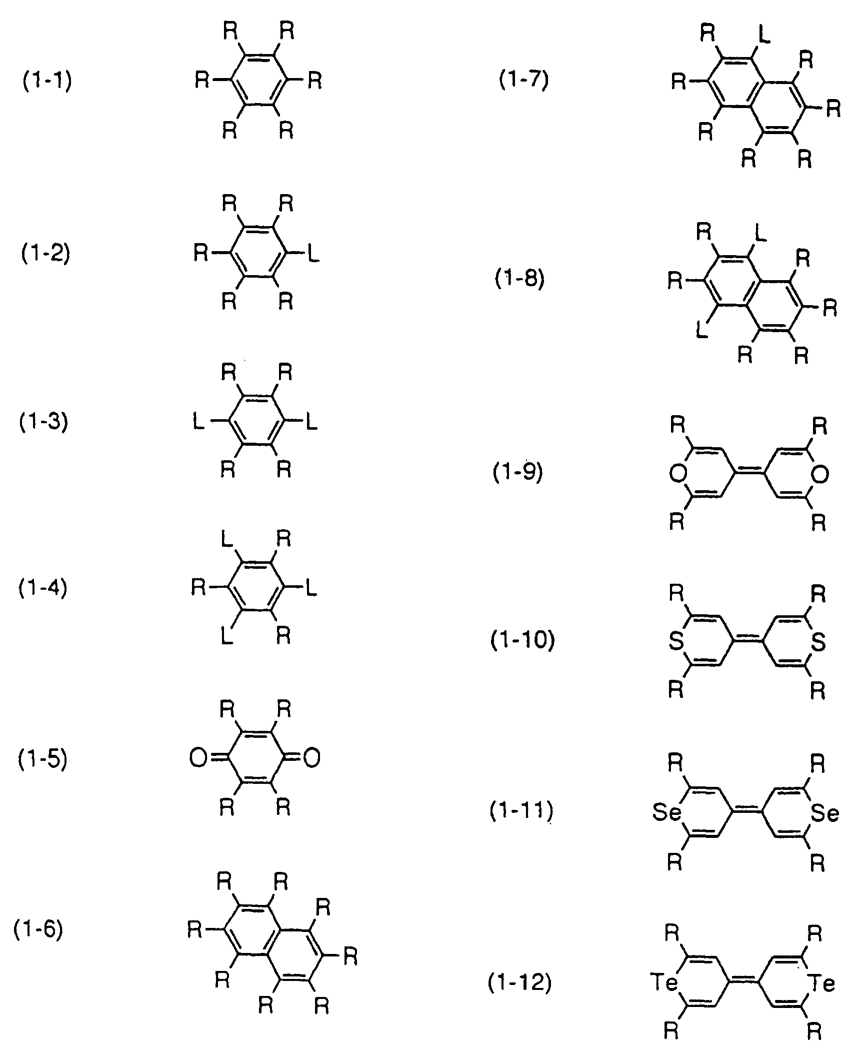 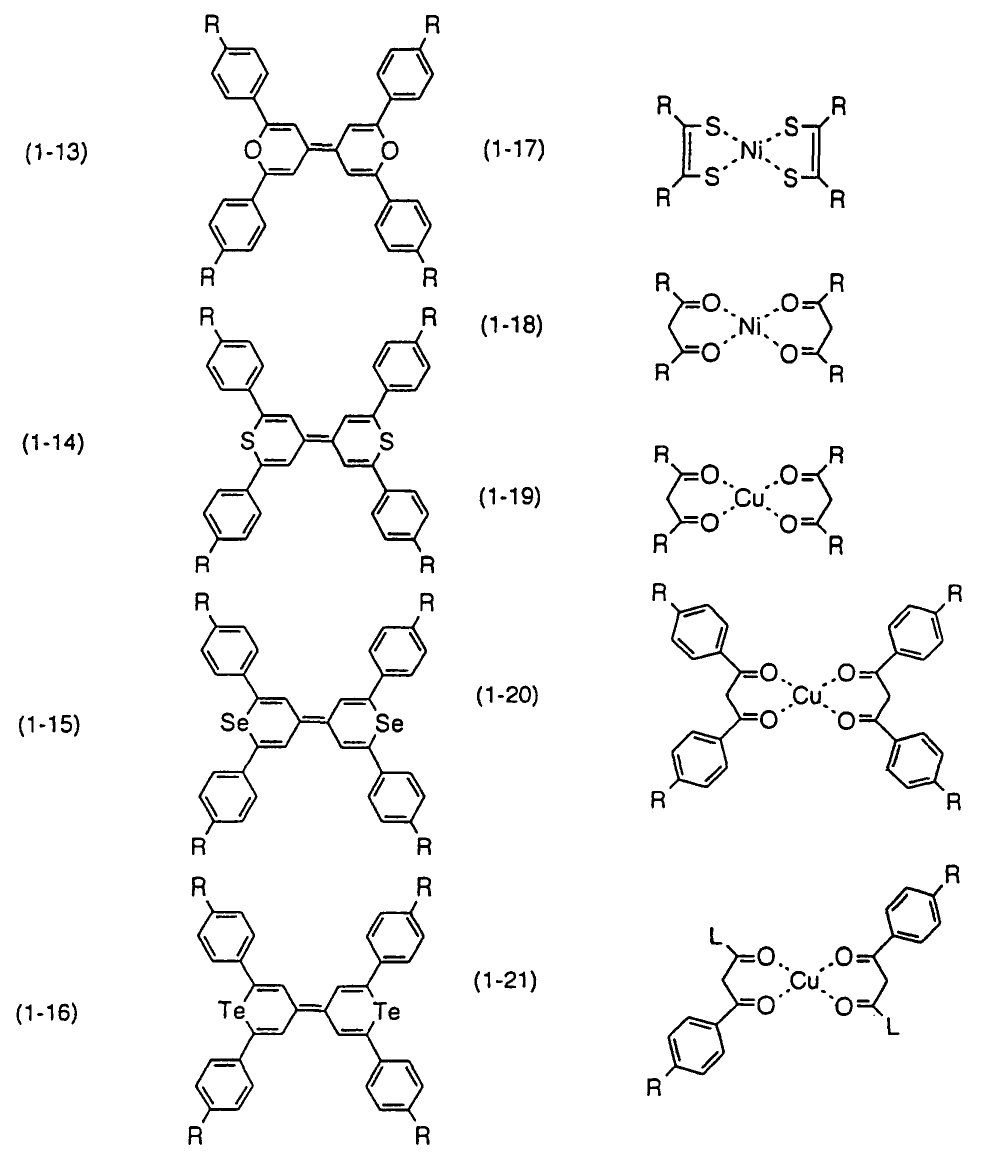 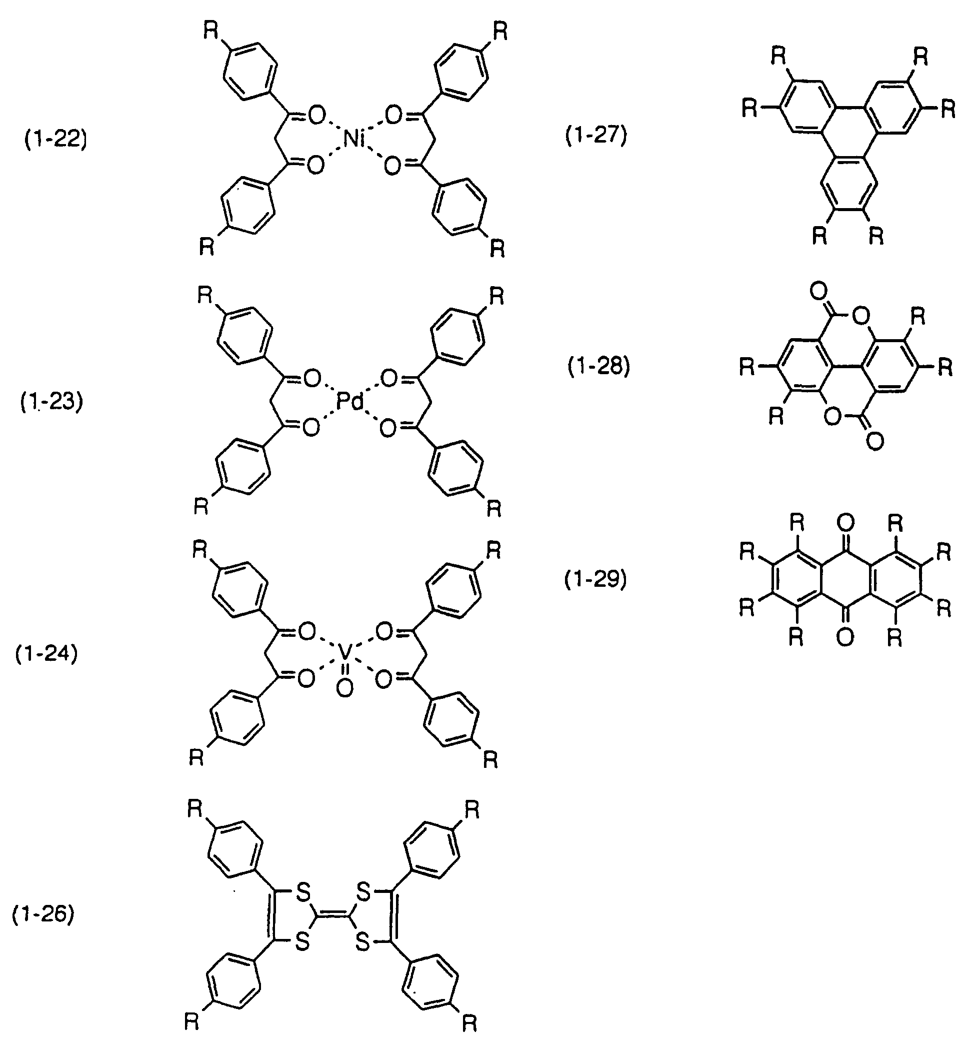 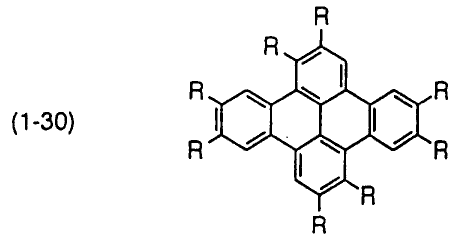 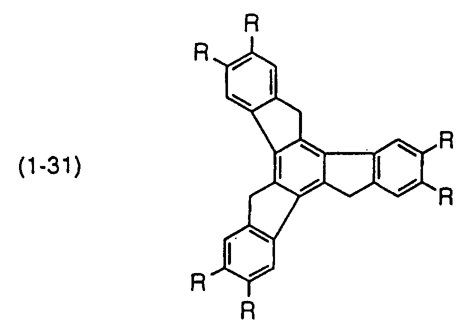 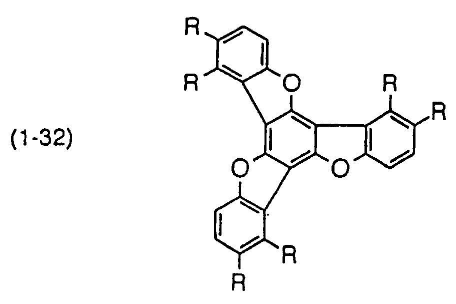 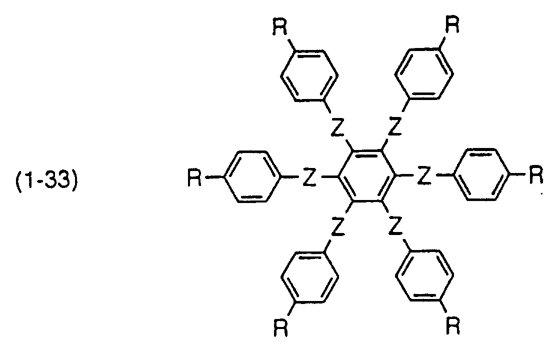 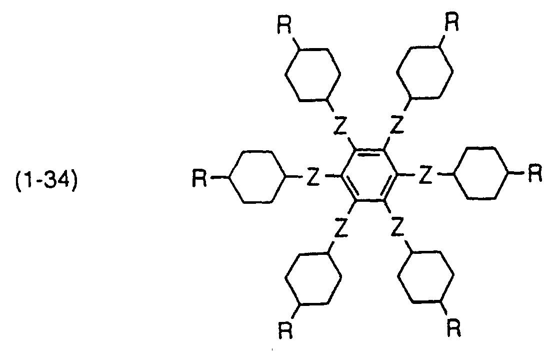 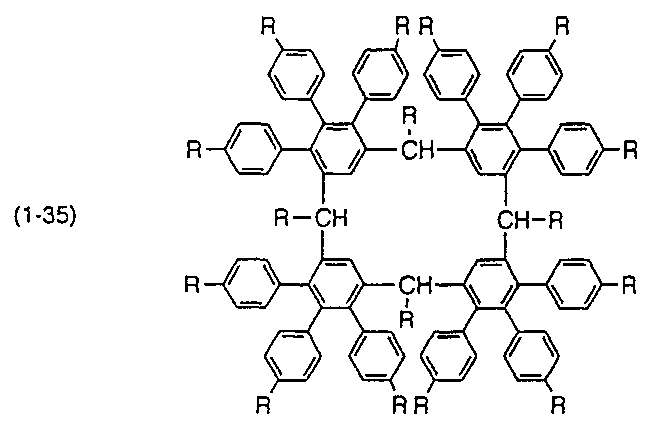 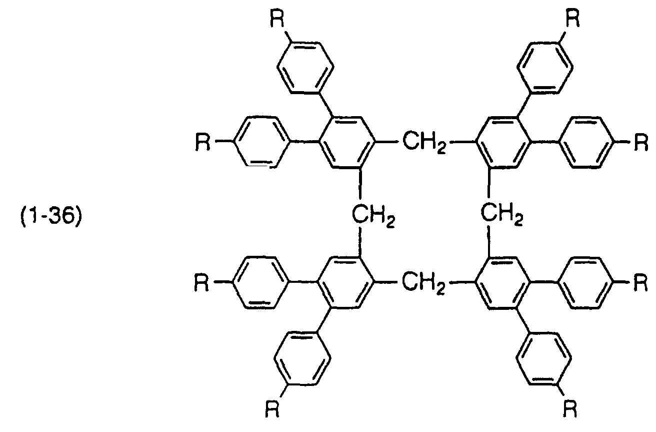 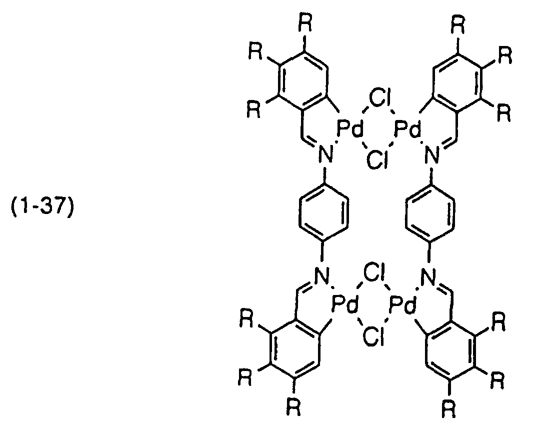 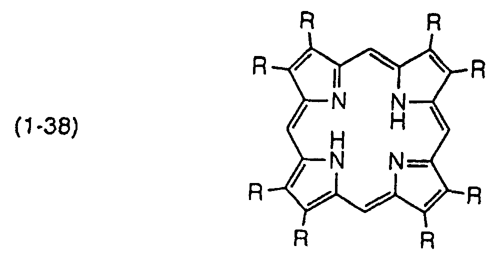 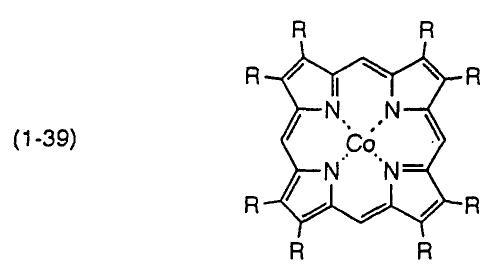 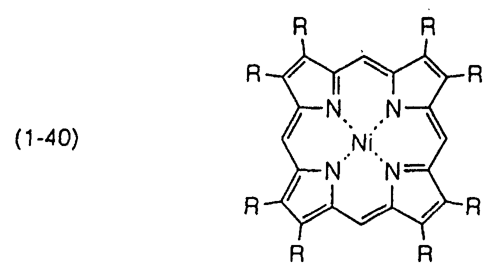 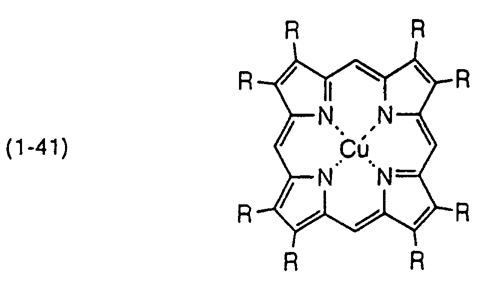 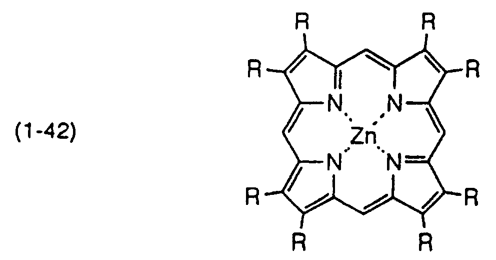 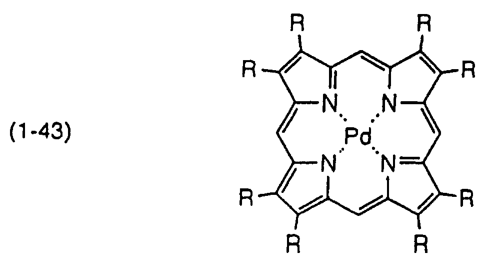 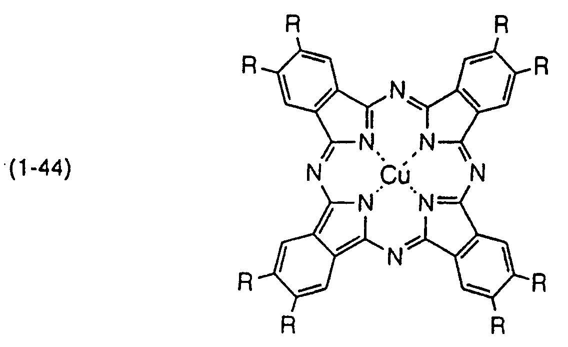 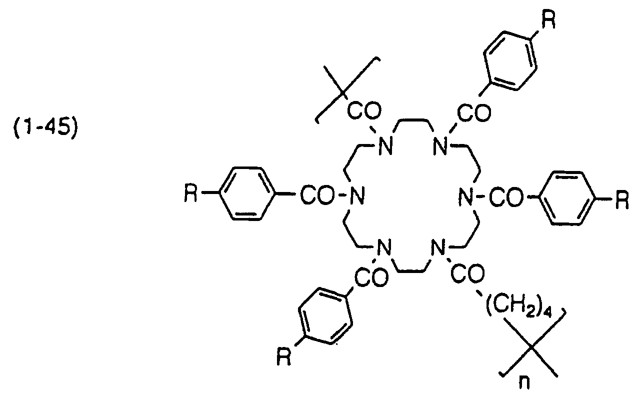 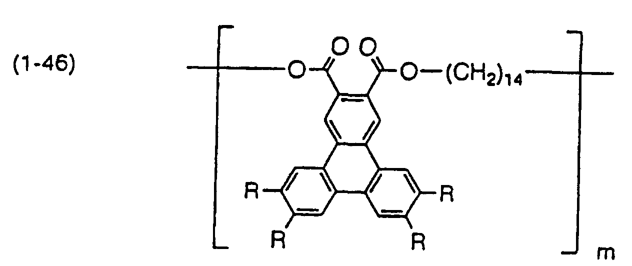 (wherein: R is selected from the group consisting of alkyl or alkoxy groups having 1 to 20 carbon atoms, in which methylene moiety in the groups may be replaced by O, S, COO, OCO, CH=CH or C≡C, and the groups of the formula (2-1) to (2-13), in which R' represents alkyl, alkoxy, alkoxylalkyl, alkenyl, alkenyloxy, alkynyl, alkynyloxy or alkadienyl groups, or aromatic residues, L represents halogen, hydrogen, cyano group, hydroxy group or the groups of the formula (3-1), Z represents a single bond, CH=CH, C≡C or CH₂O, and m, n and p represent independently integral numbers) 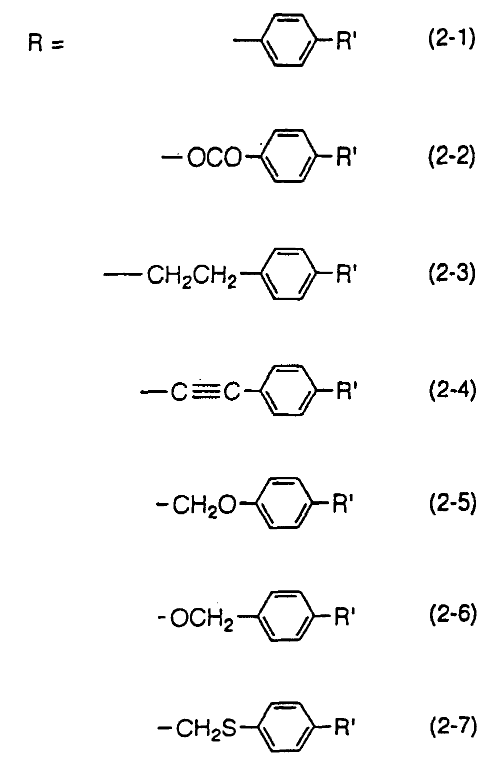 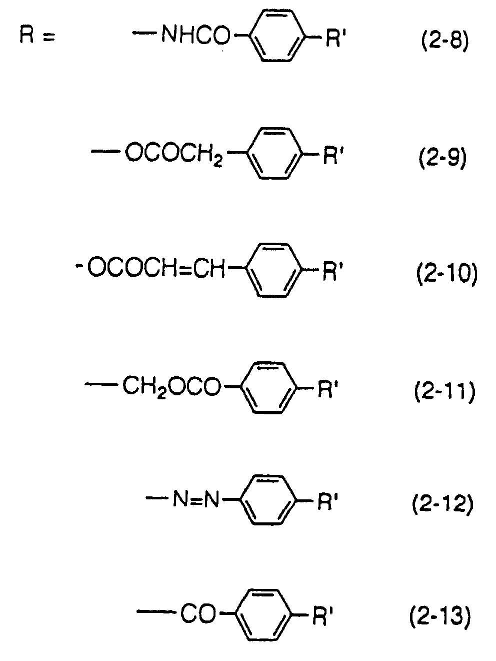
L = ―O-(CH₂)ₚ-COOH (3-1)
and wherein said non-polar solvents are selected from alkanes, alkenes, alkadienes, alkatrienes and alkynes each having 4-40 carbon atoms, and derivatives thereof in which a methylene moiety may be replaced by O, S, C=O, COO or OCO.

2. Lyotropic mesomorphic nematic or columnar media according to claim 1, wherein said sheet-like molecules are mixtures of sheet-like charge-transfer complexes made of sheet-like molecules as donator and sheet-like molecules as acceptor.

3. Lyotropic mesomorphic media according to claim 1 or 2, wherein said media exists at room temperature in a glassy mesomorphic state.

4. Lyotropic mesomorphic media according to claim 1, 2, or 3, wherein said sheet-like molecules are polymers having sheet-like side groups.

5. Lyotropic mesomorphic media according to claim 1, 2, or 3, wherein said sheet-like molecules are polymerizable monomers resulting in polymers with sheet-like units.

6. Lyotropic mesomorphic media according to claim 1, 2, or 3, wherein said non-polar solvents are selected from alkanes having 4-40 carbon atoms, and derivatives thereof in which a methylene moiety may be replaced by O, S, C=O, COO or OCO.

7. Lyotropic mesomorphic media according to (1), (2), or (3) wherein the non-polar solvents are selected from alkenes, alkadienes, alkatrienes and alkynes each having 4-40 carbon atoms, and derivatives thereof in which a methylene moiety may be replaced by O, S, C=O, COO or OCO.

8. Lyotropic mesomorphic media according to claim 1, 2, or 3, wherein said non-polar solvents are polymerizable hydrocarbons.

9. Lyotropic mesomorphic media according to claim 1, 2, or 3, wherein said non-polar solvents are polymeric hydrocarbons.

10. Lyotropic mesomorphic media according to claim 1, 2, or 3, in which said non-polar solvents are nematic mixtures consisting of alkanes and methacrylate or photoresist materials.

11. Optical compensating film made of the lyotropic mesomorphic media of claims 1 or 2, useful for the construction of optical compensators for liquid crystal devices.

12. Optical compensating film made of the lyotropic mesomorphic media according to claim 1, 2, or 3, wherein said mesomorphic media is mechanically stabilized by polymeric networks made by polymerization of polymerizable hydrocarbons.

13. Optical compensating film made of the lyotropic mesomorphic media according to claim 1, 2, or 3, wherein said mesomorphic media is stabilized by dispersion of said sheet-like molecules as droplets in polymers.

14. Liquid crystal devices using the optical compensating film of claim 11.

## Patentansprüche

1. Lyotropes mesomorphes nematisches oder säulenförmiges Medium zur Konstruktion optischer Kompensatoren für Flüssigkristallanzeigen, wobei das Medium plättchenartige Moleküle und nichtpolare Lösungsmittel umfaßt und negative optische Doppelbrechung aufweist, wobei die plättchenartigen Moleküle aus der Gruppe ausgewählt sind, die aus Verbindungen mit den folgenden Formeln besteht: 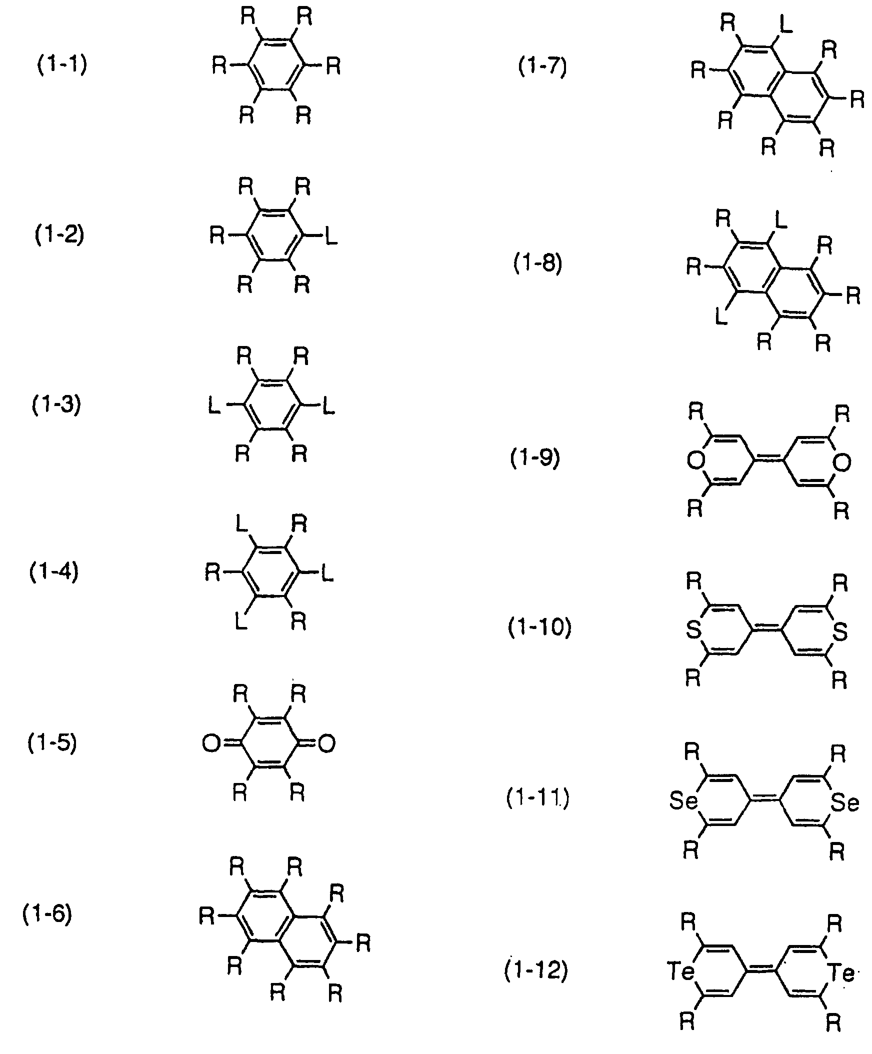 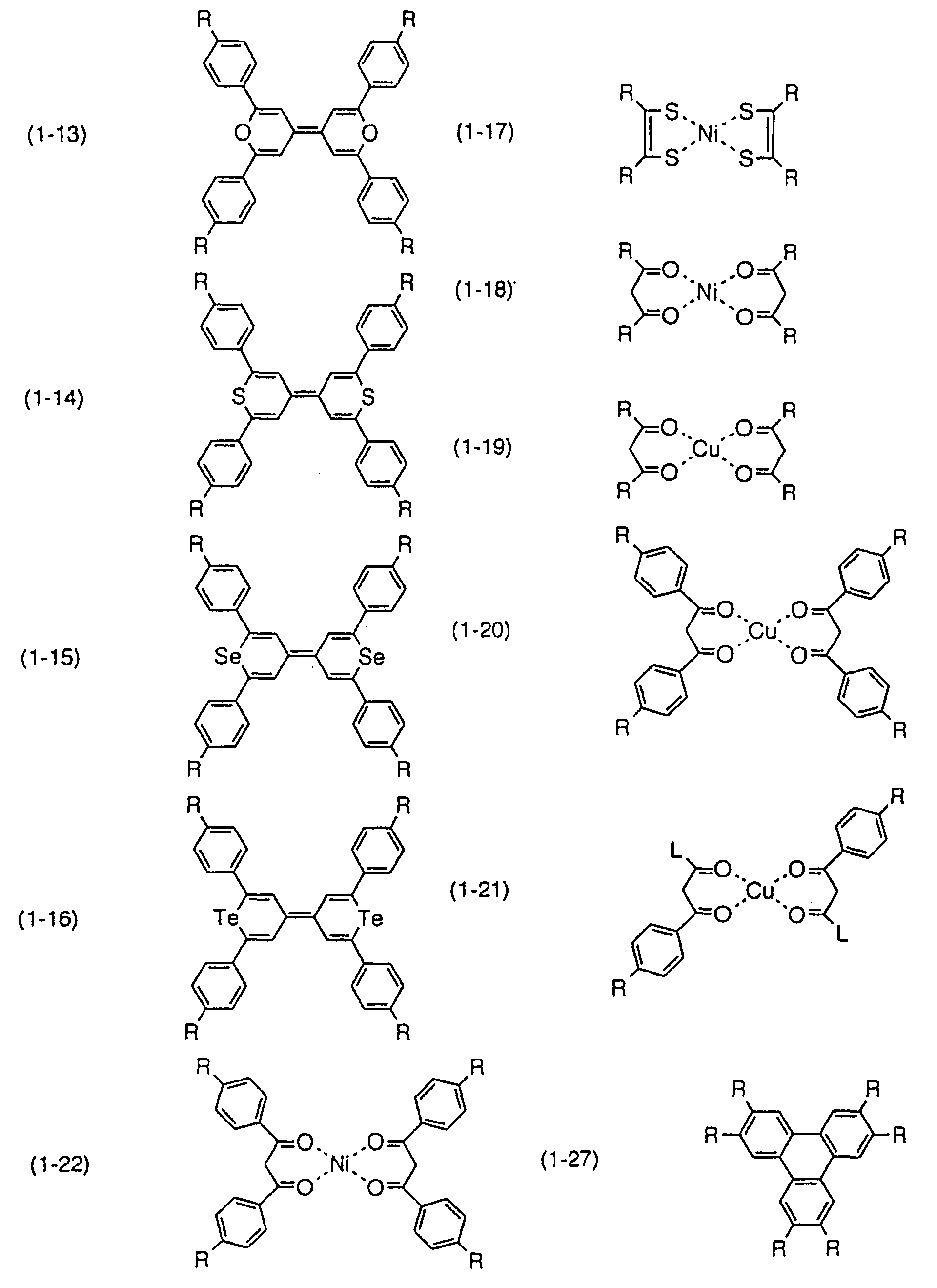 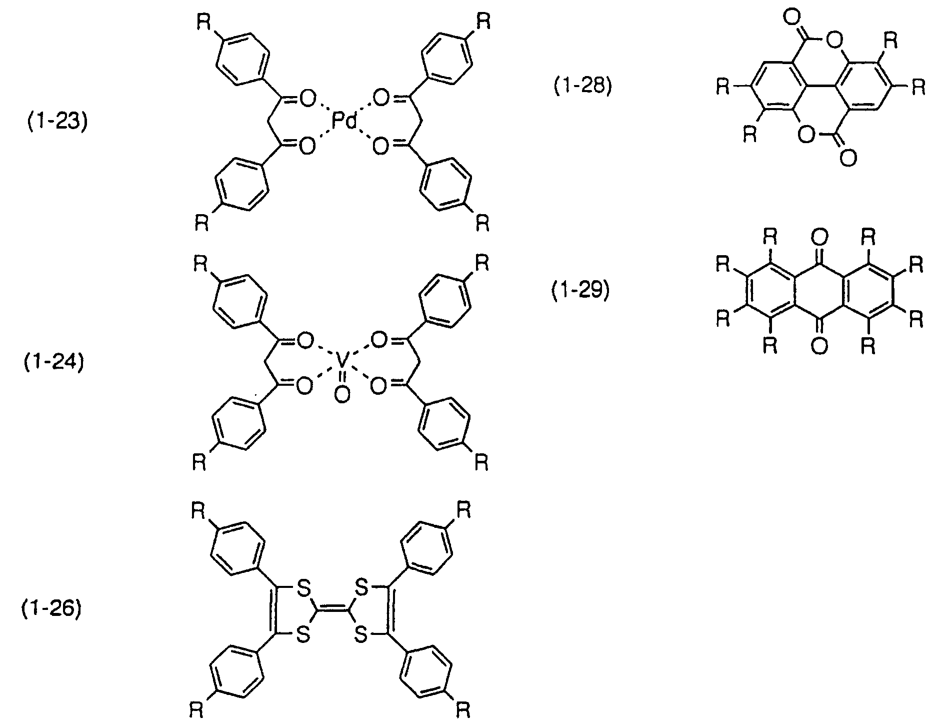 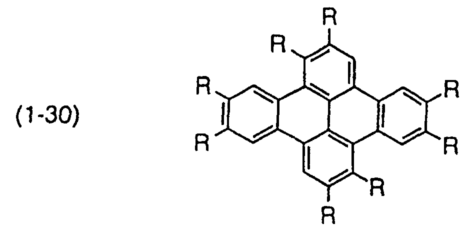 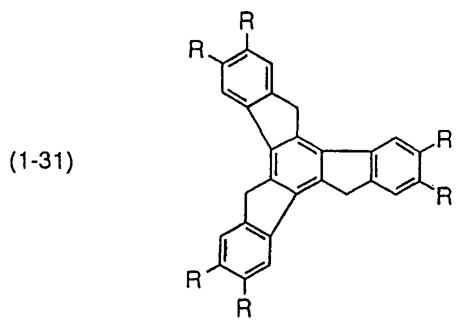 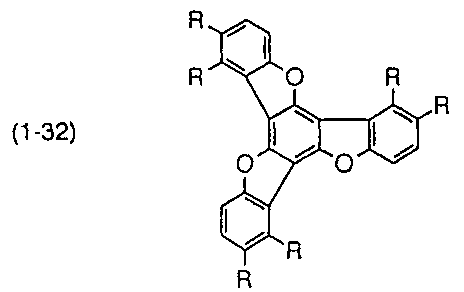 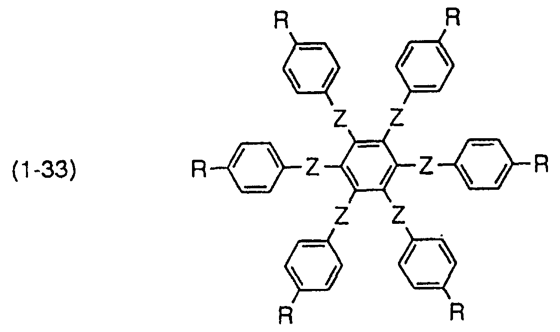 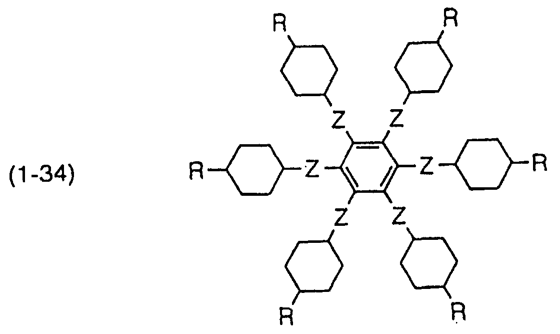 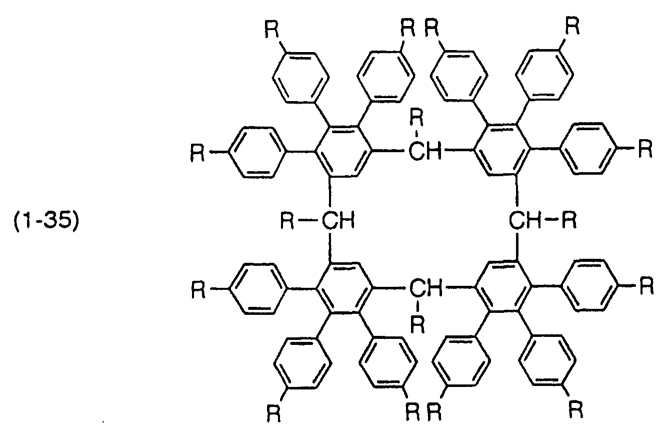 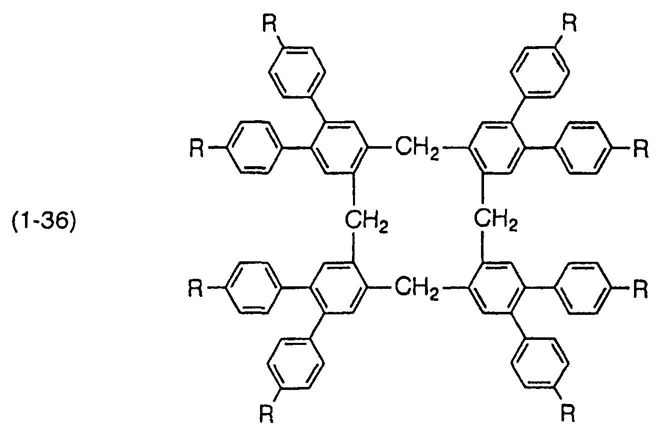 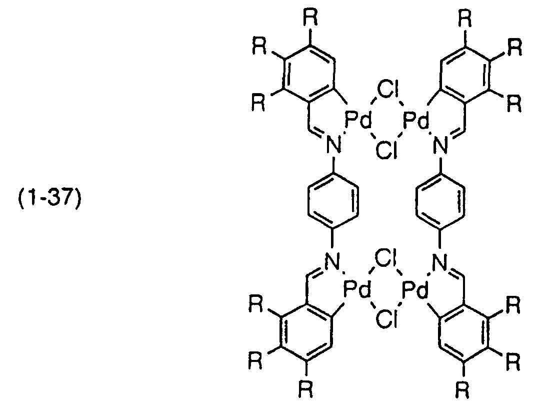 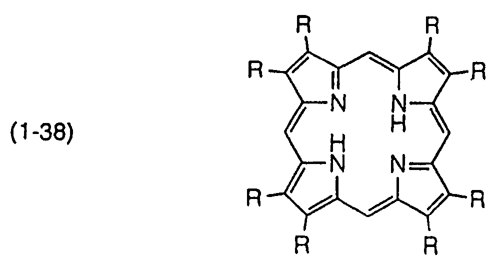 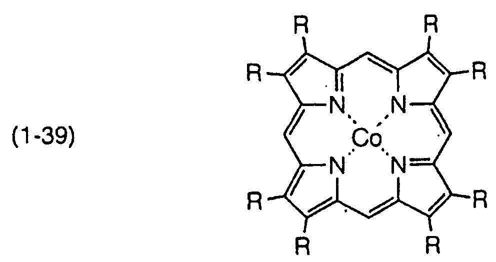 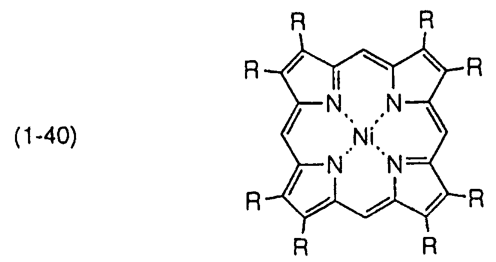 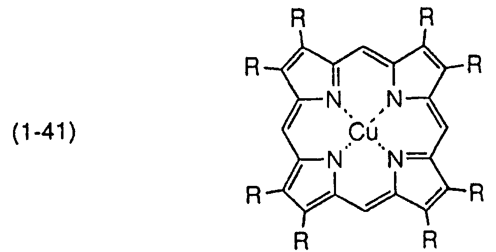 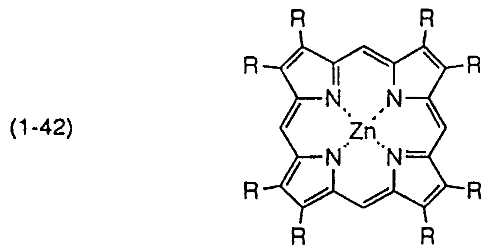 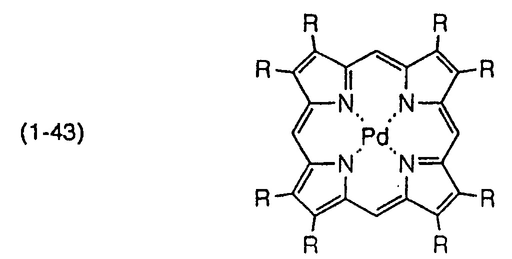 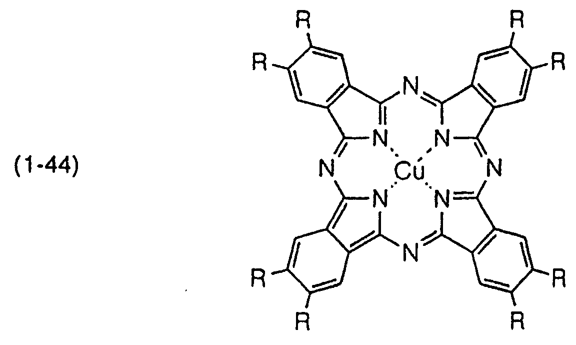 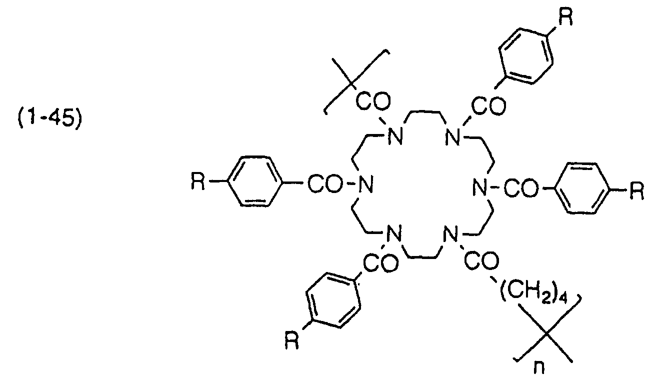 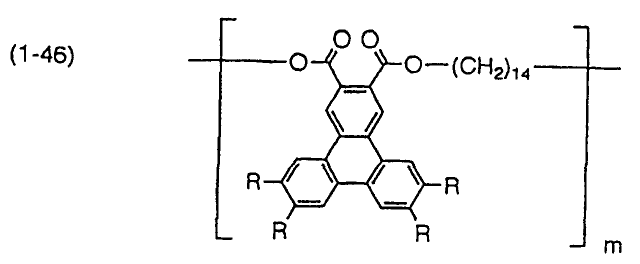 (wobei R aus der Gruppe ausgewählt ist, die aus Alkyl- oder Alkoxygruppen mit 1 bis 20 Kohlenstoffatomen besteht, in denen die Methylenkomponente in den Gruppen durch O, S, COO, OCO, CH=CH oder C C und die Gruppen mit den Formeln (2-1) bis (2-13) substituiert sein kann, in denen R' für Alkyl-, Alkoxy-, Alkoxyalkyl-, Alkenyl, Alkenyloxy-, Alkinyl-, Alkinyloxy- oder Alkadienylgruppen oder aromatische Molekülreste steht, L für Halogen, Wasserstoff, eine Cyanogruppe, eine Hydroxylgruppe oder die Gruppen mit der Formel (3-1) steht, Z eine Einfachbindung, CH=CH, C C oder CH₂O darstellt und m, n und p unabhängig voneinander ganze Zahlen darstellen), 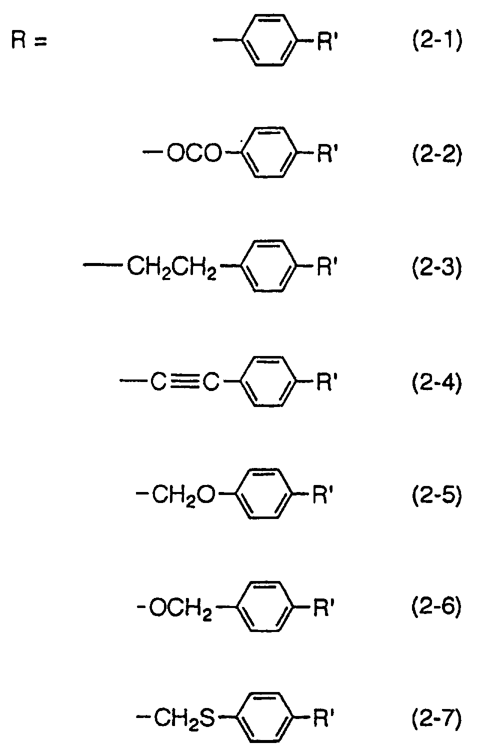 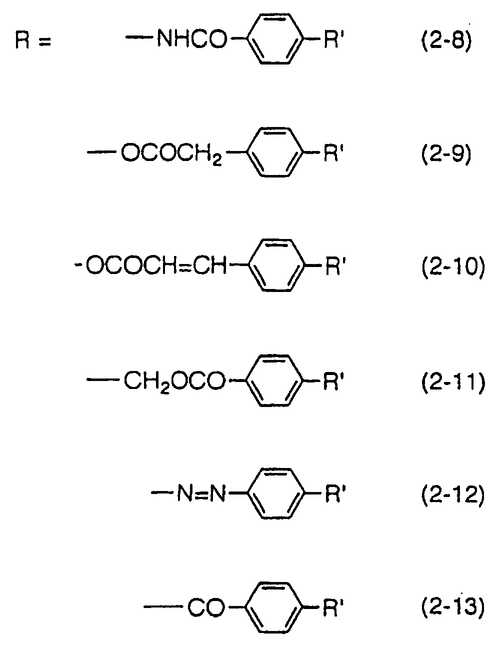
L = ―O-(CH₂)ₚ-COOH (3-1)
und wobei die nichtpolaren Lösungsmittel unter Alkanen, Alkenen, Alkadienen, Alkatrienen und Alkinen mit je 4-40 Kohlenstoffatomen und deren Derivaten ausgewählt sind, in denen eine Methylenkomponente durch O, S, C=O, COO oder OCO substituiert sein kann.

2. Lyotropes mesomorphes nematisches oder säulenförmiges Medium nach Anspruch 1, wobei die plättchenartigen Moleküle Gemische aus Donator-Akzeptor-Komplexen sind, die aus plättchenartigen Molekülen als Donator und plättchenartigen Molekülen als Akzeptor bestehen.

3. Lyotropes mesomorphes Medium nach Anspruch 1 oder 2, wobei das Medium bei Raumtemperatur in einem glasartigen mesomorphen Zustand existiert.

4. Lyotropes mesomorphes Medium nach Anspruch 1, 2 oder 3, wobei die plättchenartigen Moleküle Polymere mit plättchenartigen Seitengruppen sind.

5. Lyotropes mesomorphes Medium nach Anspruch 1, 2 oder 3, wobei die plättchenartigen Moleküle polymerisierbare Monomere sind, die Polymere mit plättchenartigen Einheiten ergeben.

6. Lyotropes mesomorphes Medium nach Anspruch 1, 2 oder 3, wobei die nichtpolaren Lösungsmittel unter Alkanen mit 4-40 Kohlenstoffatomen und deren Derivaten ausgewählt sind, in denen eine Methylenkomponente durch O, S, C=O, COO oder OCO substituiert sein kann.

7. Lyotropes mesomorphes Medium nach Anspruch 1, 2 oder 3, wobei die nichtpolaren Lösungsmittel unter Alkenen, Alkadienen, Alkatrienen und Alkinen mit je 4-40 Kohlenstoffatomen und deren Derivaten ausgewählt sind, in denen eine Methylenkomponente durch O, S, C=O, COO oder OCO substituiert sein kann.

8. Lyotropes mesomorphes Medium nach Anspruch 1, 2 oder 3, wobei die nichtpolaren Lösungsmittel polymerisierbare Kohlenwasserstoffe sind.

9. Lyotropes mesomorphes Medium nach Anspruch 1, 2 oder 3, wobei die nichtpolaren Lösungsmittel polymere Kohlenwasserstoffe sind.

10. Lyotropes mesomorphes Medium nach Anspruch 1, 2 oder 3, in dem die nichtpolaren Lösungsmittel nematische Gemische sind, die aus Alkanen und Methacrylat oder Photoresistsubstanzen bestehen.

11. Optische Kompensationsfolie, die aus dem lyotropen mesomorphen Medium gemäß Anspruch 1 oder 2 besteht und für die Konstruktion optischer Kompensatoren für Flüssigkristallelemente verwendbar ist.

12. Optische Kompensationsfolie, die aus dem lyotropen mesomorphen Medium gemäß Anspruch 1, 2 oder 3 besteht, wobei das mesomorphe Medium durch polymere Vernetzungen mechanisch stabilisiert wird, die durch Polymerisation von polymerisierbaren Kohlenwasserstoffen hergestellt werden.

13. Optische Kompensationsfolie, die aus dem lyotropen mesomorphen Medium gemäß Anspruch 1, 2 oder 3 besteht, wobei das mesomorphe Medium durch Dispersion der plättchenartigen Moleküle als Tröpfchen in Polymeren stabilisiert wird.

14. Flüssigkristallelemente mit Verwendung der optischen Kompensationsfolie gemäß Anspruch 11.

## Revendications

1. Milieu nématique ou colonnaire mésomorphe lyotropique pour la construction de compensateurs optiques pour affichages à cristaux liquides, qui comprend des molécules sous forme de feuilles et des solvants non polaires et qui ont une biréfringence optique négative, **caractérisé en ce que** lesdites molécules sous forme de feuilles sont sélectionnées parmi le groupe se composant des composés ayant la formule 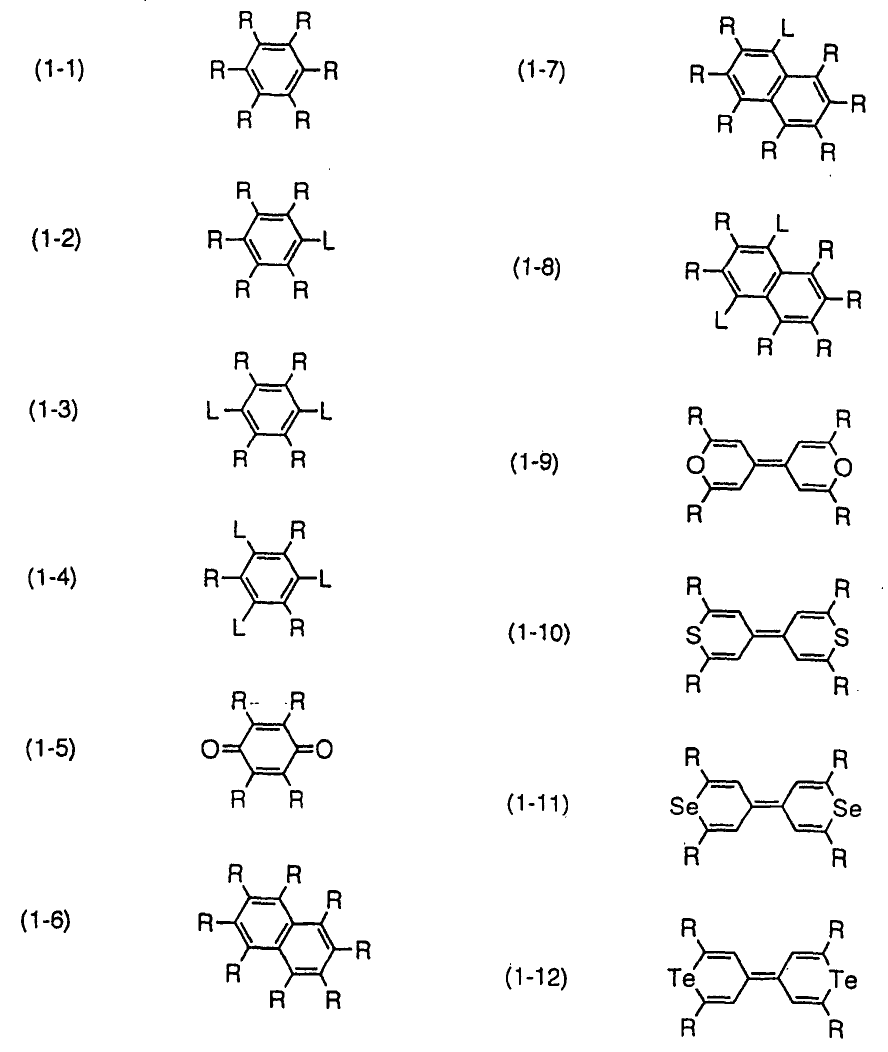 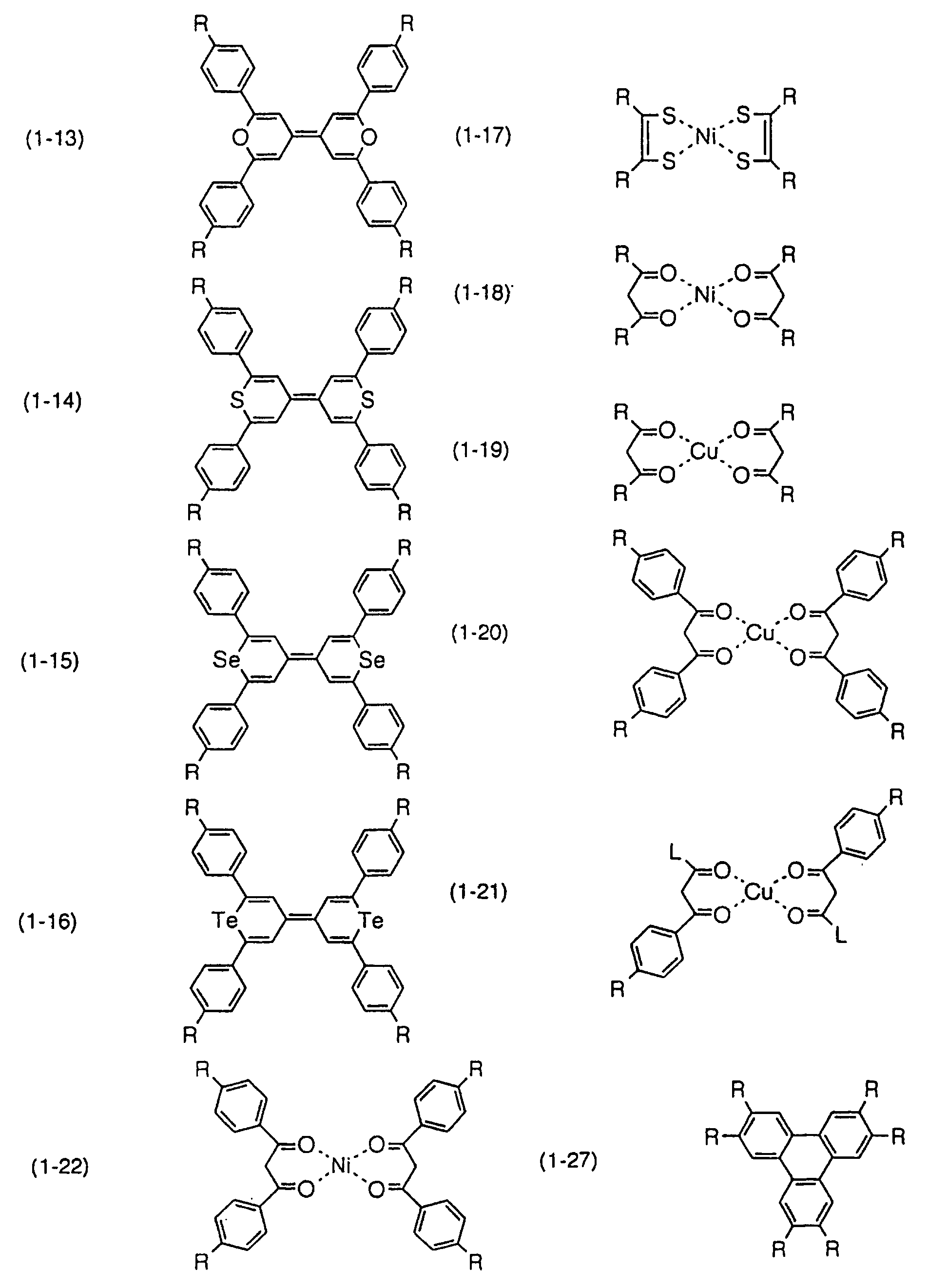 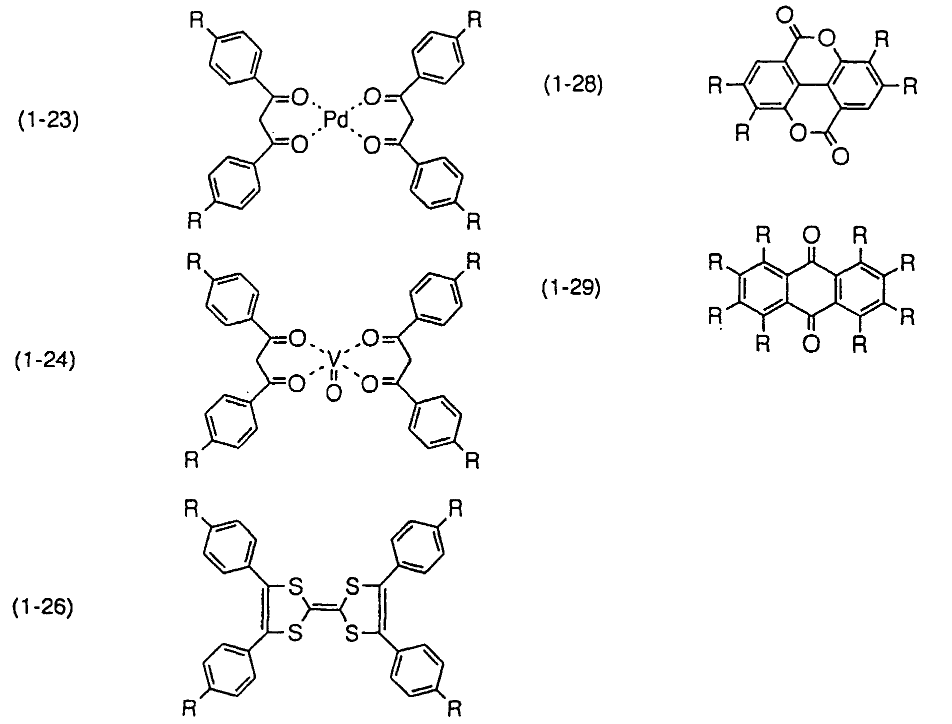 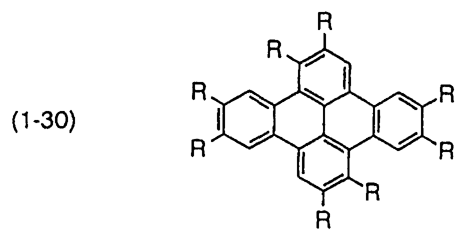 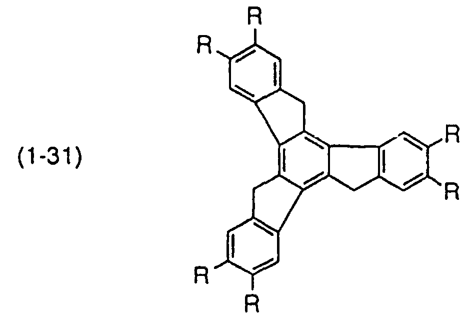 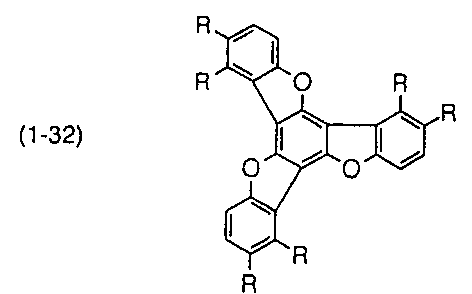 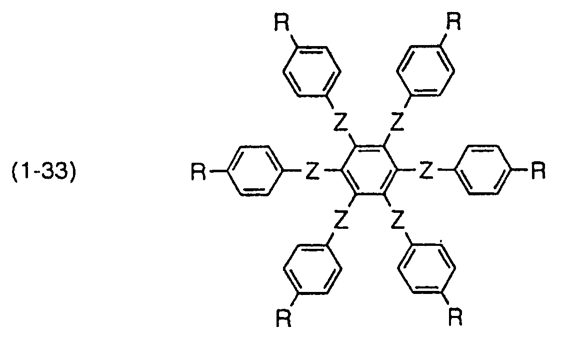 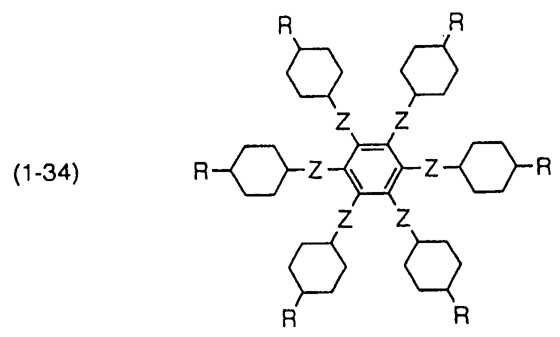 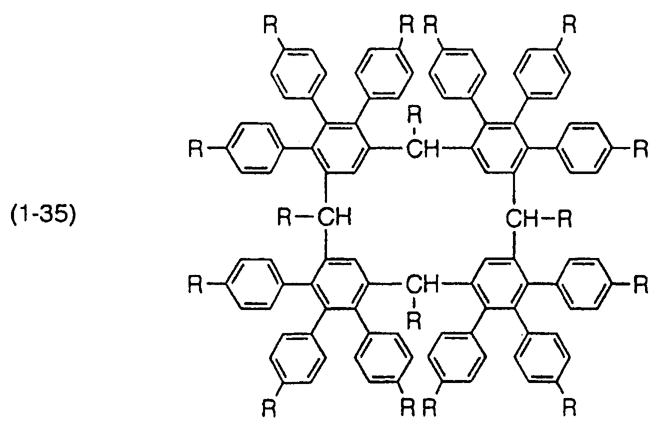 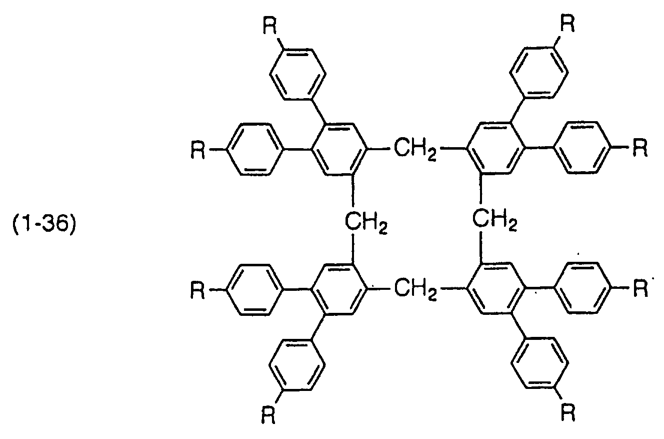 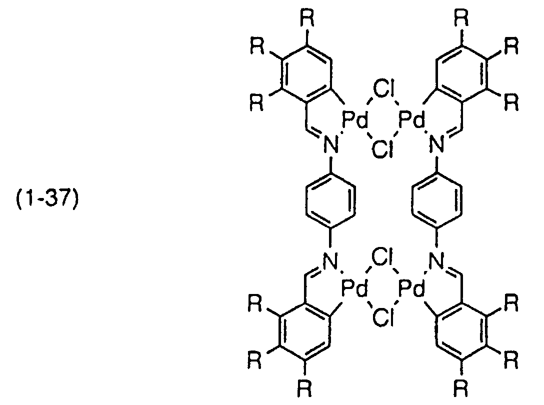 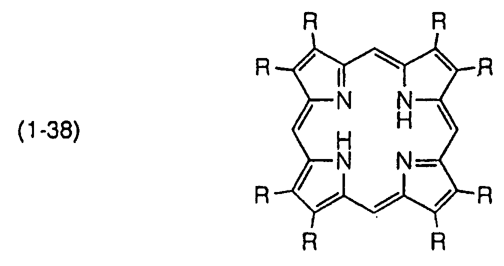 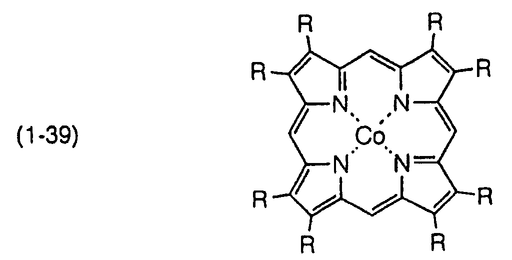 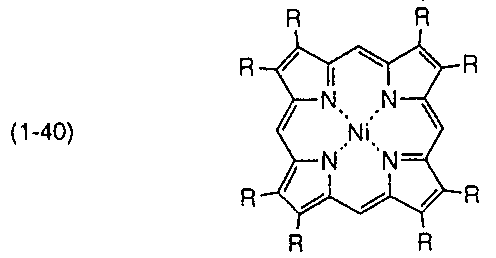 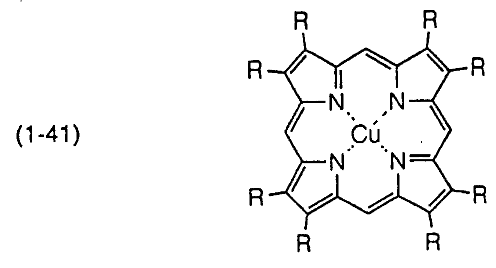 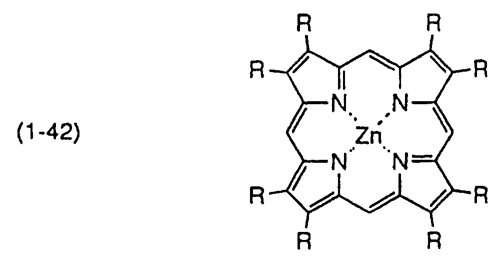 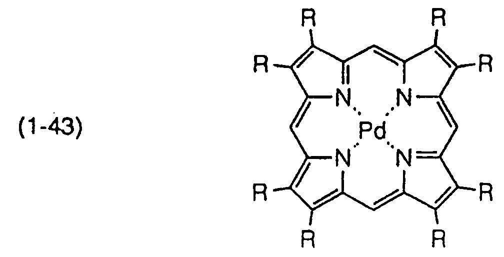 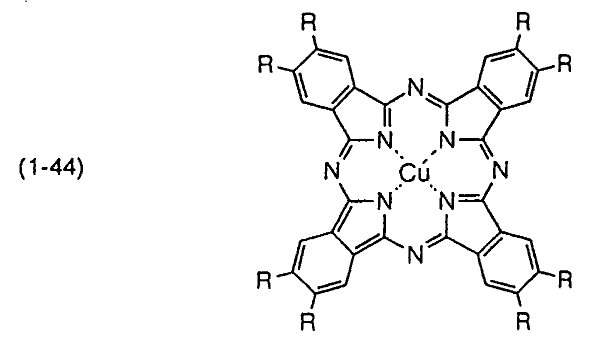 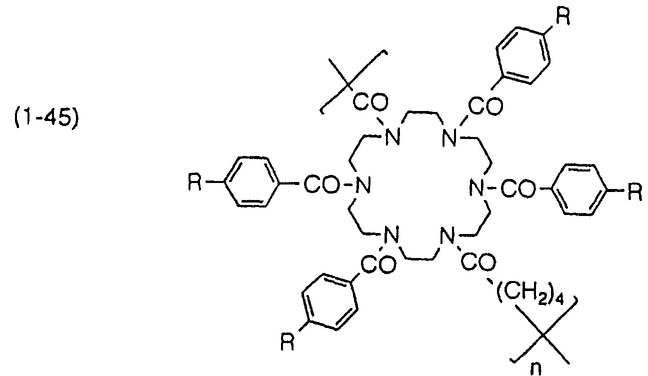 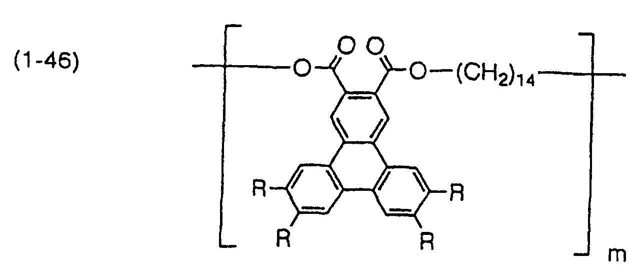 (dans lesquelles: R est sélectionné parmi le groupe constitué des groupements alkyle ou alkoxy ayant de 1 à 20 atomes de carbone, dans lesquels la fraction méthylène dans les groupements peut être remplacée par O, S, COO, OCO, CH=CH ou C≡C, et les groupements de la formule (2 - 1) à (2 - 13), dans lesquels R' représente les groupements alkyle, alkoxy, alkoxyalkyle, alkényle, alkényloxy, alkynyle, alkynyloxy, ou alkadiènyle ou des résidus aromatiques, L représente un halogène, l'hydrogène, le groupement cyano, le groupement hydroxy ou des groupements de la formule (3 - 1), Z représente une liaison simple, CH=CH, C≡C ou CH₂O, et m, n et p représentent indépendamment des nombres entiers) 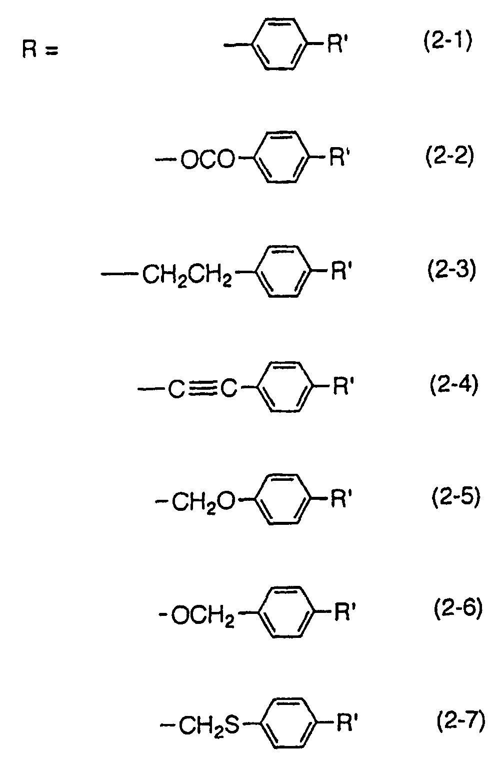 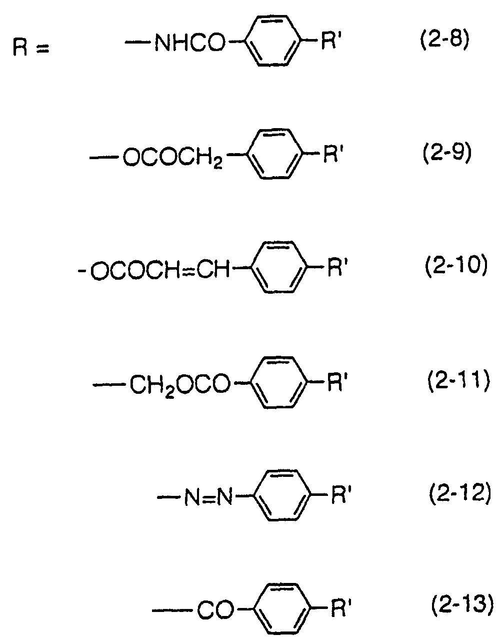
L = ―O-(CH₂)ₚ-COOH (3-1)
et dans lesquelles lesdits solvants non polaires sont sélectionnés parmi les alcanes, les alcènes, les alkadiènes, les alkatriènes et les alcynes, chacun ayant 4 - 40 atomes de carbone et leurs dérivés, dans lesquels une fraction méthylène est remplacée par O, S, C=O, COO ou OCO.

2. Milieu nématique ou colonnaire mésomorphe lyotropique selon la revendication 1, **caractérisé en ce que** lesdites molécules sous forme de feuilles sont des mélanges de complexes de transfert de charges sous forme de feuilles faits de molécules sous forme de feuilles, en tant que donneur, et des molécules en forme de feuilles, en tant qu'accepteur.

3. Milieu mésomorphe lyotropique selon la revendication 1 ou 2, **caractérisé en ce que** ledit milieu existe à température ambiante dans un état mésomorphe vitreux.

4. Milieu mésomorphe lyotropique selon la revendication 1, 2, ou 3, **caractérisé en ce que** lesdites molécules sous forme de feuilles sont des polymères ayant des groupements latéraux sous forme de feuilles.

5. Milieu mésomorphe lyotropique selon la revendication 1, 2, ou 3, **caractérisé en ce que** lesdites molécules sous forme de feuilles sont des monomères polymérisables résultant en des polymères ayant des unités sous forme de feuilles.

6. Milieu mésomorphe-lyotropique selon la revendication 1, 2, ou 3, **caractérisé en ce que** lesdits solvants non polaires sont sélectionnés parmi des alcanes ayant 4 - 40 atomes de carbone et leurs dérivés, dans lesquels la fraction de méthylène peut être remplacée par O, S, C=O, COO ou OCO.

7. Milieu mésomorphe lyotropique selon (1), (2), ou (3), **caractérisé en ce que** les solvants non polaires sont sélectionnés parmi les alcènes, les alkadiènes, les alkatriènes et les alcynes, chacun ayant 4 - 40 atomes de carbone et leurs dérivés, dans lesquels la fraction méthylène peut être remplacée par O, S, C=O, COO ou OCO.

8. Milieu mésomorphe lyotropique selon la revendication 1, 2, ou 3, **caractérisé en ce que** lesdits solvants non polaires sont des hydrocarbures polymérisables.

9. Milieu mésomorphe lyotropique selon la revendication 1, 2, ou 3, **caractérisé en ce que** lesdits solvants non polaires sont des hydrocarbures polymères.

10. Milieu mésomorphe lyotropique selon la revendication 1, 2, ou 3, **caractérisé en ce que** lesdits solvants non polaires sont des mélanges nématiques constitués d'alcanes et de méthacrylate ou de matériaux photosensibles.

11. Film de compensation optique fait du milieu mésomorphe lyotropique selon les revendications 1 ou 2, utile pour la construction de compensateurs optiques pour des dispositifs à cristaux liquides.

12. Film de compensation optique fait du milieu mésomorphe lyotropique selon les revendications 1, 2 ou 3, **caractérisé en ce que** le milieu mésomorphe est stabilisé d'une manière mécanique par des réseaux polymères obtenus par polymérisation d'hydrocarbures polymérisables.

13. Film de compensation optique fait du milieu mésomorphe lyotropique selon les revendications 1, 2 ou 3, **caractérisé en ce que** ledit milieu mésomorphe est stabilisé par la dispersion desdites molécules sous forme de feuilles en tant que gouttelettes dans des polymères.

14. Dispositifs à cristaux liquides utilisant le film de compensation optique de la revendication 11.
